(19) Europäisches Patentamt / European Patent Office / Office européen des brevets

(11) **EP 2 661 086 A1**

(12) **EUROPEAN PATENT APPLICATION**
published in accordance with Art. 153(4) EPC

(43) Date of publication:
**06.11.2013 Bulletin 2013/45**

(51) Int Cl.:
**H04N 7/32** (2006.01)

(21) Application number: **11853084.9**

(22) Date of filing: **28.12.2011**

(86) International application number:
**PCT/JP2011/007341**

(87) International publication number:
**WO 2012/090501 (05.07.2012 Gazette 2012/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2010 US 201061427523 P**

(71) Applicant: **Panasonic Corporation**
**Osaka 571-8501 (JP)**

(72) Inventors:
- **WAHADANIAH, Viktor**
  **Singapore 534415 (SG)**
- **LIM, Chong Soon**
  **Singapore 534415 (SG)**
- **NAING, Sue Mon Thet**
  **Singapore 534415 (SG)**
- **JING, Xuan**
  **Singapore 534415 (SG)**

- **SASAI, Hisao**
  **Chuo-ku**
  **Osaka 540-6207 (JP)**
- **NISHI, Takahiro**
  **Chuo-ku**
  **Osaka 540-6207 (JP)**
- **SHIBAHARA, Youji**
  **Chuo-ku**
  **Osaka 540-6207 (JP)**
- **SUGIO, Toshiyasu**
  **Chuo-ku**
  **Osaka 540-6207 (JP)**

(74) Representative: **Grünecker, Kinkeldey,**
**Stockmair & Schwanhäusser**
**Leopoldstrasse 4**
**80802 München (DE)**

(54) **MOTION-VIDEO DECODING METHOD, MOTION-VIDEO ENCODING METHOD, MOTION-VIDEO DECODING APPARATUS, MOTION-VIDEO ENCODING APPARATUS, AND MOTION-VIDEO ENCODING/DECODING APPARATUS**

(57) A moving picture decoding method according to the present invention includes: performing intra prediction on a target block to calculate values of predicted samples of the target block (S403); and calculating reconstructed samples of the target block by adding difference data and the values of the predicted samples of the target block (S404), wherein in the performing of intra prediction, validity of each of reference samples that are located one of immediately above and immediately to the left of the target block is determined, and when the reference samples include both a valid reference sample and an invalid reference sample, the intra prediction is performed using the valid reference sample, and an intra-predicted reference sample is determined as a valid reference sample, and an inter-predicted reference sample is determined as an invalid reference sample.

FIG. 8

**Description**

[Technical Field]

The present invention relates to moving picture coding methods, moving picture decoding methods, moving picture coding apparatuses, moving picture decoding apparatuses, and moving picture coding and decoding apparatuses, and in particular to a moving picture coding method and a moving picture decoding method using intra-picture prediction.

[Background Art]

State-of-the-art moving picture coding schemes, such as H.263, MPEG-4 AVC/H.264, and the next-generation high-efficiency video coding (HEVC), use intra-picture prediction and inter-picture prediction. In intra-picture prediction (hereinafter, referred to as intra prediction), sample values of a coding target unit are predicted from previously-coded samples within the same picture. In contrast, in inter-picture prediction (hereinafter, referred to as inter prediction), sample values of a coding target unit in a picture are predicted from samples of previously-coded other pictures.

Here, during moving picture decoding processing, errors may be generated due to a variety of factors such as transmission losses or non-conformant decoding implementation. When inter prediction is used, such an error is also propagated to subsequent pictures, and may accumulate over time. Further, intra prediction tends to be influenced by the quality of reference samples. Thus, when erroneous sample values are used as reference samples for intra prediction, picture quality significantly drops.

Conventional techniques for solving such a drop in quality due to erroneous intra prediction include a constrained intra prediction scheme used in H.264. This scheme allows only intra-predicted samples to be used as reference samples for intra prediction, and prohibit specific intra prediction methods when reference samples are not intra-predicted (see Non Patent Literature (NPL) 1).

[Citation List]

[Non Patent Literature]

[NPL 1] ISO/IEC 14496-10 "MPEG-4 Part 10 Advanced Video Coding"

[Summary of Invention]

[Technical Problem]

Here, the next-generation HEVC moving picture coding scheme uses variable-length coding units of a plurality of sizes. With this scheme, whether to use intra prediction or inter prediction can be individually set for each coding unit. Accordingly, HEVC can improve coding efficiency.

However, such cases in which variable-length coding units are used are not assumed with the constrained intra prediction scheme in conventional techniques, coding efficiency may be insufficient in such cases in which variable-length coding units are used.

In view of this, an object of the present invention is to provide a moving picture coding method, a moving picture decoding method, a moving picture coding apparatus, a moving picture decoding apparatus, and a moving picture coding and decoding apparatus that enable improvement in coding efficiency.

[Solution to Problem]

In order to achieve the above object, a moving picture decoding method according to an aspect of the present invention includes: analyzing a coded moving picture bitstream to obtain difference data of a target block among a plurality of blocks of two or more sizes; performing intra prediction on the target block to calculate values of predicted samples of the target block; and calculating reconstructed samples of the target block by adding the difference data and the values of the predicted samples, wherein in the performing of intra prediction, validity of each of reference samples that are located one of immediately above and immediately to the left of the target block is determined, and when the reference samples include both a valid reference sample and an invalid reference sample, the intra prediction is performed using the valid reference sample, and intra-predicted reference sample is determined as a valid reference sample, and an inter-predicted reference sample is determined as an invalid reference sample.

According to this, with the moving picture decoding method according to the aspect of the present invention, when reference samples that are located one of immediately above and immediately to the left of a target block include both a valid reference sample and an invalid reference sample, intra prediction can be performed using the valid reference sample. Accordingly, with the moving picture decoding method, more valid reference samples can be utilized, thereby enabling improvement in coding efficiency.

In addition, in the analyzing, the coded moving picture bitstream may be further analyzed to determine an intra prediction method, and the performing of intra prediction further may include: calculating a complementary sample using one or more valid reference samples including the valid reference sample, the complementary sample being a reference sample at a location of the invalid reference sample; and calculating the predicted samples of the target block in accordance with the intra prediction method, using the valid reference sample and the complementary sample.

According to this, with the moving picture decoding method according to the aspect of the present invention, a sample at an invalid reference sample location can be generated using valid reference samples. Accordingly, with the moving picture decoding method, more valid reference samples can be utilized, thereby enabling improvement in coding efficiency.

Further, the calculating of a complementary sample may include: selecting one of the valid reference samples as a selected sample; and determining a value of the selected sample as a value of the complementary sample.

Further, the selecting may include: identifying, as a start reference sample location, a location of a valid reference sample found first in a search in a direction starting from a location of a bottom-left reference sample and ending at a location of a top-right reference sample among locations of all the reference samples; determining whether the invalid reference sample is located before or after the start reference sample location in a sample order that is the same as an order of samples in the search; selecting a sample at the start reference sample location as the selected sample when the invalid reference sample is located before the start sample location; and selecting, when the invalid reference sample is located after the start sample location, a valid reference sample as the selected sample in accordance with the sample order that is the same as the order of samples in the search, the valid reference sample being located before and closest to a location of the invalid reference sample.

Further, the calculating of a complementary sample may include: selecting the valid reference samples as a plurality of selected samples; calculating a plurality of scaling values by multiplying a value of each of the selected samples by a predetermined scaling factor; calculating a first sum total value that is a sum total of the scaling values; calculating a second sum total value that is a sum of the first sum total value and a predetermined offset value; and calculating a value of the complementary sample by down-shifting the second sum total value by a predetermined shift step value.

Further, the intra prediction may be intra DC prediction.

According to this, with the moving picture decoding method according to the aspect of the present invention, in the intra DC prediction, more valid reference samples can be utilized, thereby enabling improvement in coding efficiency.

Further, the performing of intra prediction may include: selecting each of one or more valid reference samples including the valid reference sample as a selected sample; specifying the number of the selected samples; selecting a scaling factor, an offset value, and a shift step value, using a look-up table, in accordance with the number of the selected samples; calculating a first sum total value that is a sum total of values of the selected samples; calculating a scaling value by multiplying the first sum total value by the selected scaling factor; calculating a second sum total value that is a sum of the selected offset value and the scaling value; and generating each value of all the predicted samples of the target block by down-shifting the second sum total value by the selected shift step value.

In addition, the performing of intra prediction may further include performing of intra prediction in the case in which a predetermined value is determined as each value of all the predicted samples of the target block.

In the analyzing, selection information coded in a header of the coded moving picture bitstream may be further obtained, the selection information may indicate one of (1) a constrained intra prediction scheme that is the intra prediction and (2) an unconstrained intra prediction scheme for performing intra prediction using all the reference samples without determining the validity of each of the reference samples, and in the performing of intra prediction, the intra prediction may be performed using one of the constrained intra prediction scheme and the unconstrained intra prediction scheme indicated by the selection information.

According to this, with the moving picture decoding method according to the aspect of the present invention, it is possible to know, based on selection information, which of the constrained intra prediction scheme and the unconstrained intra prediction scheme is used.

In the performing of intra prediction, a reference sample outside a target picture may be determined as an invalid reference sample.

Further, in the performing of intra prediction, a reference sample that is not included in the same unit of picture division as the target block may be determined as an invalid reference sample.

The unit of picture division may be a slice.

The unit of picture division may be a lightweight slice.

The unit of picture division may be a tile.

The unit of picture division may be a wavefront parallel processing unit (WPP).

Further, a moving picture coding method according to an aspect of the present invention includes: dividing an original picture into a plurality of blocks of two or more sizes; performing intra prediction on a target block among the blocks to calculate values of predicted samples; calculating difference data that represents a difference between an original image in the target block and the values of the predicted samples; and coding the difference data to generate a coded moving picture bitstream, wherein in the performing of intra prediction, validity of each of reference samples that are located one of immediately above and immediately to the left of the target block is determined, and when the reference samples include both a valid reference sample and an invalid reference sample, the intra prediction is performed using the valid reference sample, and an intra-predicted reference sample is determined as a valid reference sample, and an inter-predicted reference sample is determined as an invalid reference sample.

According to this, with the moving picture coding method according to the aspect of the present invention, when reference samples that are located one of immediately above and immediately to the left of a target block include both a valid reference sample and an invalid reference sample, intra prediction can be performed using the valid reference sample. Accordingly, with the moving picture decoding method, more valid reference samples can be utilized, thereby enabling improvement in coding efficiency.

It should be noted that the present invention can be realized not only as such a moving picture coding method and such a moving picture decoding method, but also as a moving picture coding apparatus or a moving picture decoding apparatus that uses, as means, characteristic steps included in the moving picture coding method or the moving picture decoding method. Further, the present invention can also be realized as a moving picture coding and decoding apparatus including such a moving picture coding apparatus and such a moving picture decoding apparatus.

Furthermore, the present invention can also be realized as a program for causing a computer to execute the characteristic steps included in the moving picture coding method or the moving picture decoding method. It goes without saying that such a program can be distributed via a recording medium such as CD-ROM and a transmission medium such as the Internet.

Moreover, the present invention can be realized as a semiconductor integrated circuit (LSI) that realizes a part or all of functions of such a moving picture coding apparatus or moving picture decoding apparatus, or various devices or a system including such a moving picture coding apparatus or moving picture decoding apparatus.

[Advantageous Effects of Invention]

As described above, the present invention can provide a moving picture coding method, a moving picture decoding method, a moving picture coding apparatus, a moving picture decoding apparatus, and a moving picture coding and decoding apparatus that enable improvement in coding efficiency.

[Brief Description of Drawings]

[FIG. 1] FIG. 1 shows an example of intra prediction from neighboring reference samples when blocks have the same size.

[FIG. 2] FIG. 2 shows an example of intra prediction from neighboring reference samples when blocks have different sizes.

[FIG. 3] FIG. 3 is a flowchart showing moving picture coding processing in Embodiment 1 of the present invention.

[FIG. 4A] FIG. 4A shows an example of the location of a signal that indicates a result of selection between an unconstrained intra prediction scheme and a constrained intra prediction scheme in a compressed moving picture stream in Embodiment 1 of the present invention.

[FIG. 4B] FIG. 4B shows an example of the location of a signal that indicates a result of selection between the unconstrained intra prediction scheme and the constrained intra prediction scheme in a compressed moving picture stream in Embodiment 1 of the present invention.

[FIG. 4C] FIG. 4C shows an example of the location of a signal that indicates a result of selection between the unconstrained intra prediction scheme and the constrained intra prediction scheme in a compressed moving picture stream in Embodiment 1 of the present invention.

[FIG. 4D] FIG. 4D shows an example of the location of a signal that indicates a result of selection between the unconstrained intra prediction scheme and the constrained intra prediction scheme in a compressed moving picture stream in Embodiment 1 of the present invention.

[FIG. 5] FIG. 5 is a flowchart showing moving picture coding processing using the constrained intra prediction scheme in Embodiment 1 of the present invention.

[FIG. 6] FIG. 6 is a flowchart showing moving picture coding processing using the constrained intra prediction scheme in Embodiment 1 of the present invention.

[FIG. 7] FIG. 7 is a flowchart showing moving picture decoding processing in Embodiment 1 of the present invention.

[FIG. 8] FIG. 8 is a flowchart showing moving picture decoding processing using the constrained intra prediction scheme in Embodiment 1 of the present invention.

[FIG. 9] FIG. 9 is a flowchart showing moving picture decoding processing using the constrained intra prediction scheme in Embodiment 1 of the present invention.

[FIG. 10] FIG. 10 is a block diagram showing an example of a moving picture coding apparatus in Embodiment 1 of the present invention.

[FIG. 11] FIG. 11 is a block diagram showing an example of a first coding unit that uses the constrained intra prediction scheme in Embodiment 1 of the present invention.

[FIG. 12] FIG. 12 is a block diagram showing an example of a moving picture decoding apparatus in Embodiment 1 of the present invention.

[FIG. 13] FIG. 13 is a block diagram showing an example of a first decoding unit that uses the constrained intra prediction scheme in Embodiment 1 of the present invention.

[FIG. 14] FIG. 14 is a flowchart showing moving picture coding processing in Embodiment 2 of the present invention.

[FIG. 15A] FIG. 15A is a diagram showing an example of the location of a signal that indicates a result of selection between a non-selective intra DC prediction scheme and a selective intra DC prediction scheme in a compressed moving picture stream in Embodiment 2 of the present invention.

[FIG. 15B] FIG. 15B is a diagram showing an example of the location of a signal that indicates a result of selection between the non-selective intra DC prediction scheme and the selective intra DC prediction scheme in a compressed moving picture stream in Embodiment 2 of the present invention.

[FIG. 15C] FIG. 15C is a diagram showing an example of the location of a signal that indicates a result of selection between the non-selective intra DC prediction scheme and the selective intra DC prediction scheme in a compressed moving picture stream in Embodiment 2 of the present invention.

[FIG. 15D] FIG. 15D is a diagram showing an example of the location of a signal that indicates a result of selection between the non-selective intra DC prediction scheme and the selective intra DC prediction scheme in a compressed moving picture stream in Embodiment 2 of the present invention.

[FIG. 16] FIG. 16 is a flowchart showing moving picture coding processing using the selective intra DC prediction scheme in Embodiment 2 of the present invention.

[FIG. 17] FIG. 17 is a flowchart showing moving picture decoding processing in Embodiment 2 of the present invention.

[FIG. 18] FIG. 18 is a flowchart showing moving picture decoding processing using the selective intra DC prediction scheme in Embodiment 2 of the present invention.

[FIG. 19] FIG. 19 is a block diagram showing an example of a moving picture coding apparatus in Embodiment 2 of the present invention.

[FIG. 20] FIG. 20 is a block diagram showing an example of a first coding unit that uses the selective intra DC prediction scheme in Embodiment 2 of the present invention.

[FIG. 21] FIG. 21 is a block diagram showing an example of a moving picture decoding apparatus in Embodiment 2 of the present invention.

[FIG. 22] FIG. 22 is a block diagram showing an example of a first decoding unit that uses the selective intra DC prediction scheme in Embodiment 2 of the present invention.

[FIG. 23] FIG. 23 shows an overall configuration of a content providing system for implementing content distribution services.

[FIG. 24] FIG. 24 shows an overall configuration of a digital broadcasting system.

[FIG. 25] FIG. 25 shows a block diagram illustrating an example of a configuration of a television.

[FIG. 26] FIG. 26 shows a block diagram illustrating an example of a configuration of an information reproducing/recording unit that reads and an writes information from and on a recording medium that is an optical disk.

[FIG. 27] FIG. 27 shows an example of a configuration of a recording medium that is an optical disk.

[FIG. 28A] FIG. 28A shows an example of a cellular phone.

[FIG. 28B] FIG. 28B is a block diagram showing an example of a configuration of a cellular phone.

[FIG. 29] FIG. 29 illustrates a structure of multiplexed data.

[FIG. 30] FIG. 30 schematically shows how each stream is multiplexed in multiplexed data.

[FIG. 31] FIG. 31 shows how a video stream is stored in a stream of PES packets in more detail.

[FIG. 32] FIG. 32 shows a structure of TS packets and source packets in the multiplexed data.

[FIG. 33] FIG. 33 shows a data structure of a PMT.

[FIG. 34] FIG. 34 shows an internal structure of multiplexed data information.

[FIG. 35] FIG. 35 shows an internal structure of stream attribute information.

[FIG. 36] FIG. 36 shows steps for identifying video data.

[FIG. 37] FIG. 37 shows an example of a configuration of an integrated circuit for implementing the moving picture coding method and the moving picture decoding method according to each of Embodiments.

[FIG. 38] FIG. 38 shows a configuration for switching between driving frequencies.

[FIG. 39] FIG. 39 shows steps for identifying video data and switching between driving frequencies.

[FIG. 40] FIG. 40 shows an example of a look-up table in which video data standards are associated with driving frequencies.

[FIG. 41A] FIG. 41A is a diagram showing an example of a configuration for sharing a module of a signal processing unit.

[FIG. 41B] FIG. 41B is a diagram showing another example of a configuration for sharing a module of the signal processing unit.

[Description of Embodiments]

First is a description of a problem that occurs when processing using a constrained intra prediction scheme is performed using variable-length coding units of a plurality of sizes.

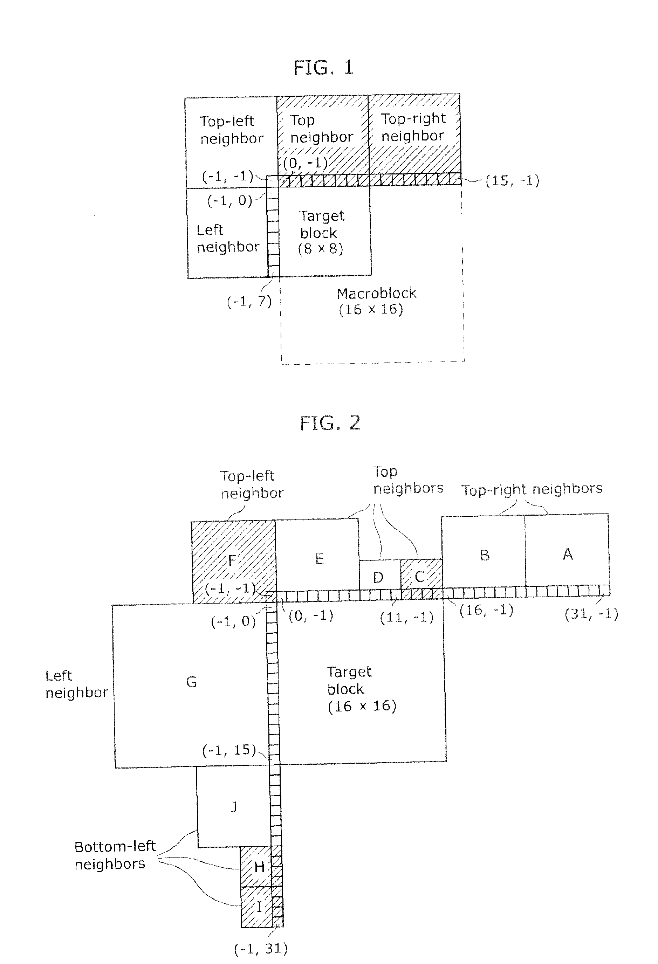

FIG. 1 shows an example of processing using the constrained intra prediction scheme on an $8 \times 8$ coding target block when variable-length coding units are the same. In the drawing, inter-predicted blocks are diagonally shaded. Specifically, the top and top-right neighboring blocks are coded using inter prediction, while the left and top-left neighboring blocks are coded using intra prediction. Reference samples used for performing intra prediction are shown by small boxes.

When the constrained intra prediction scheme is used in this example, among a total of nine possible intra prediction methods (referred to as intra prediction modes in H.264 specification) for $8 \times 8$ intra prediction, three intra prediction methods are allowed to be used, namely Intra_$8\times8$_Horizontal, Intra_$8\times8$_DC and Intra_$8\times8$_Horizontal_Up, whereas the remaining intra prediction methods in five directions are not allowed to be used.

Further, the next-generation HEVC moving picture coding scheme uses a plurality of variable-length coding units such as $4 \times 4$, $8 \times 8$, $16 \times 16$, $32 \times 32$, and $64 \times 64$ two-dimensional coding target blocks. With this scheme, whether to use intra prediction or inter prediction can be individually set for each coding unit. Accordingly, the coding efficiency of HEVC improves. Further, it is reported in the reference that such a flexible coding unit division is beneficial, compared to the conventional technology.

Here, a problem of insufficient coding efficiency arises when the constrained intra prediction scheme is applied to a moving picture coding scheme in which variable-length coding units are used which include both intra-predicted and inter-predicted reference samples.

FIG. 2 shows an example of processing using the constrained intra prediction scheme when variable-length coding units of different sizes are used. In this example, a coding target block is a $16 \times 16$ block. Top-right neighboring blocks A and B are intra-predicted, top neighboring block C is inter-predicted, top neighboring blocks D and E are intra-predicted, top-left neighboring block F is inter-predicted, left neighboring block G is intra-predicted, a bottom-left neighboring block J is intra-predicted, and bottom-left neighboring blocks H and I are inter-predicted.

Specifically, as shown in FIG. 1, when the block size is fixed, the target block always has one neighboring block in one direction (bottom left, left, top, or top right). On the other hand, as shown in FIG. 2, when the block size is variable, the target block may have a plurality of neighboring blocks in one direction. Furthermore, different prediction types may be used for these blocks. As in this case, when at least one of the blocks neighboring in one direction is inter-predicted, an intra prediction method using reference samples in one direction cannot be used, with the constrained intra prediction scheme. This causes the case in which although an intra-predicted valid reference sample is present, the valid reference sample cannot be used.

Specifically, the multi-directional intra prediction in HEVC supports a selection of various intra prediction methods using one or more neighboring reference samples (indicated by small boxes in the drawing. Here, when the conventional-technique H.264 constrained intra prediction scheme is applied, all intra prediction methods except one method that use top and top-right reference samples cannot be used due to block C being inter-predicted.

Further, the intra DC prediction method is allowed according to the H.264 constrained intra prediction scheme; however, all the reference samples from the top neighboring blocks are not used due to the presence of both intra-predicted samples and inter-predicted reference samples. Thus, an intra DC predicted sample value is calculated using only reference samples from the left neighboring block. Accordingly, the conventional techniques for solving a drop in quality due to erroneous intra prediction do not result in optimum coding efficiency under the presence of both of intra-predicted and inter-predicted reference samples.

In contrast, in embodiments of the present invention, new methods for performing resilient intra (constrained-intra) prediction are proposed. In the embodiments, the usage of reliable reference samples in performing intra prediction is maximized. Further, the latest video coding scheme such as the next-generation HEVC moving picture coding scheme utilizes a combination of a multi-directional intra prediction scheme and variable-length coding units. The embodiments describe means for performing intra prediction with improved error resistance for such moving picture coding schemes.

With the moving picture coding method according to the embodiments of the present invention, the complexity of calculation is maintained at the same level while obtaining the effect of error resistance, and also resilient intra prediction can be performed at optimal efficiency. Accordingly, the moving picture coding method can improve coding efficiency.

The following is a detailed description of embodiments of the present invention using the drawings. It should be noted that all the embodiments described below show preferable specific examples of the present invention. Numerical values, shapes, materials, constituent elements, arrangement positions and the connection configuration of the constituent elements, steps, the order of the steps, and the like shown in the following embodiments are merely examples, and are not intended to limit the present invention. The present invention is limited only by the appended claims. Therefore, among the constituent elements in the following embodiments, constituent elements that are not described in independent claims that show the most significant concept of the present invention are described as elements constituting more preferable configurations, although such constituent elements are not necessarily required to achieve the object of the present invention.

The embodiments of the present invention describe a moving picture coding method and a moving picture decoding method using constrained intra prediction in which intra-picture prediction is performed using only intra-predicted samples.

It should be noted that throughout this specification, the term "available sample location" denotes the case where an image sample is physically present. In one possible embodiment of the present invention, an image sample is determined as being unavailable when the sample is located outside the edges of a picture; otherwise, the sample is determined as being available.

In another possible embodiment of the present invention, an image sample is determined as being unavailable when the sample is located outside the edges of a picture or is located in a unit of picture division different from the target unit of picture division; otherwise, the sample is determined as being available. The term "target unit of picture division" denotes a unit of picture division including a block or a sample to be coded or decoded.

Further, the unit of picture division is a slice, for example. It should be noted that this unit of picture division may be an entropy slice, a lightweight slice, a tile, or a wavefront parallel processing unit (WPP) in HEVC.

An entropy slice and a lightweight slice are slices having reduced information to be updated compared to that of a conventional slice. Specifically, with conventional slices, entire header information called a "slice header" needs to be updated for each slice. On the other hand, with lightweight slices, elimination of dependence on the result of a processed block immediately before is taken into account, and information to be updated is reduced.

A tile is a unit that represents a target region indicating the order of coding. Within this unit, processing is performed for each coding unit (LCU) in accordance with the processing order determined in advance (e.g., raster scan).

WPP is a target unit indicating that the dependence of the coding order is changed. For example, a conventional method of processing depending on the result of a processed block immediately before can be changed to a method using only the processing result of a top-right processed block. Accordingly, parallel processing can be realized.

[Embodiment 1]

Embodiment 1 of the present invention describes a constrained intra prediction scheme for performing intra prediction processing using reference-sample values. In this scheme, the validity of each reference sample location is determined first. Then, a complementary sample value that is a reference sample value at an invalid reference sample location is calculated, using a reference sample value at a valid reference sample location. After that, intra prediction processing is performed using the valid reference sample value and the complementary sample value. In an embodiment of the present invention, when a reference samples is not intra-predicted, the sample is determined as being invalid; otherwise, the sample is determined as being valid. Further, in an embodiment of the present invention, when a reference sample is not intra-predicted or is not available, the sample is determined as being invalid; otherwise, the sample is determined as being valid.

It should be noted that the following also describes a valid reference sample as a valid sample, a value thereof as a valid sample value, and the location thereof as a valid sample location. Similarly, the following also describes an invalid reference sample as an invalid sample, the value thereof as an invalid sample value, and the location thereof as an invalid sample location.

In this specification, the term "unconstrained intra prediction scheme" is used when an intra prediction scheme according to the conventional technique is referred to, which uses a reference sample value at an available reference sample location without determining the validity of an available reference sample location first, compared with the constrained intra prediction scheme. Specifically, the unconstrained intra prediction scheme is a scheme for performing intra prediction using reference sample values at all available reference sample locations, irrespective of whether a reference sample is valid (intra-predicted) or invalid (non-intra predicted).

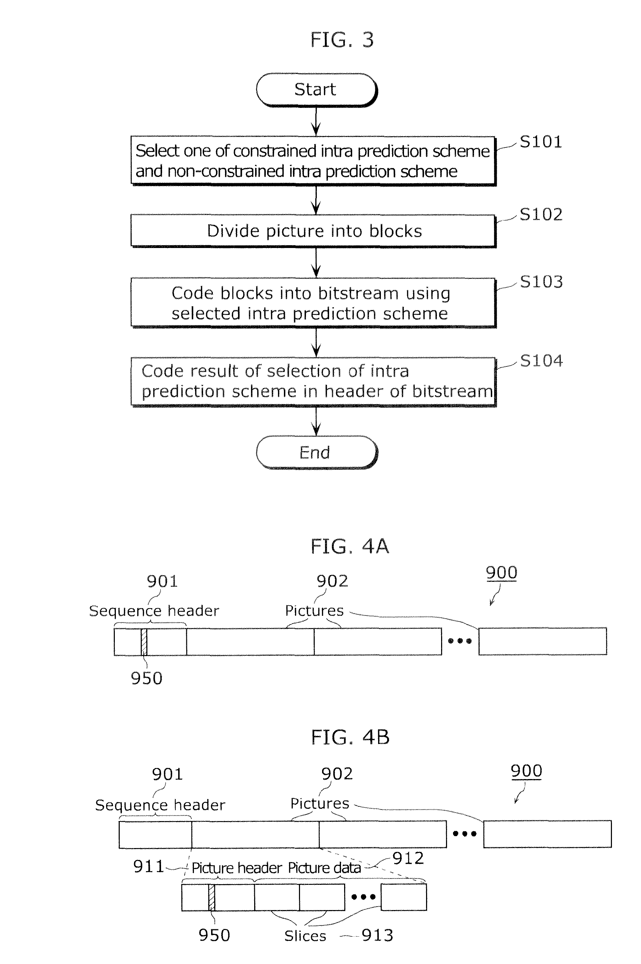

FIG. 3 shows a flowchart for describing moving picture coding processing according to Embodiment 1 of the present invention.

First, in step S101, one of the constrained intra prediction scheme and the unconstrained intra prediction scheme is selected as an intra prediction scheme.

Next, in step S102, a target original picture is divided into one or more coding blocks. An example of a coding block is a two-dimensional block including $32 \times 32$ original image samples. Further, in this step S102, an original picture is divided into a plurality of coding blocks of two or more sizes.

Next, in step S103, a coded moving picture bitstream is generated by coding the obtained coding blocks. Further, in step S103, when a target block is coded using an intra prediction type, the intra prediction scheme selected in step S101 is used.

Next, in step S104, the result of selection between the constrained intra prediction scheme and the unconstrained intra prediction scheme made in step S101 is coded in the header of the coded moving picture stream.

FIGS. 4A to 4D show a location at which selection information 950 is arranged in a coded moving picture bitstream 900 generated using the above moving picture coding method. This selection information 950 is information indicating which of the constrained intra prediction scheme and the unconstrained intra prediction scheme is used as an intra prediction scheme.

As shown in FIGS. 4A to 4D, the coded moving picture bitstream 900 includes a sequence header 901 and a plurality of data pieces 902 in picture units. Each of the data pieces 902 in picture units includes a picture header 911 and picture data 912. Furthermore, the picture data 912 includes a plurality of data pieces 913 in slice units. Further, each of the data pieces 913 in slice units includes a slice header 921 and slice data 922.

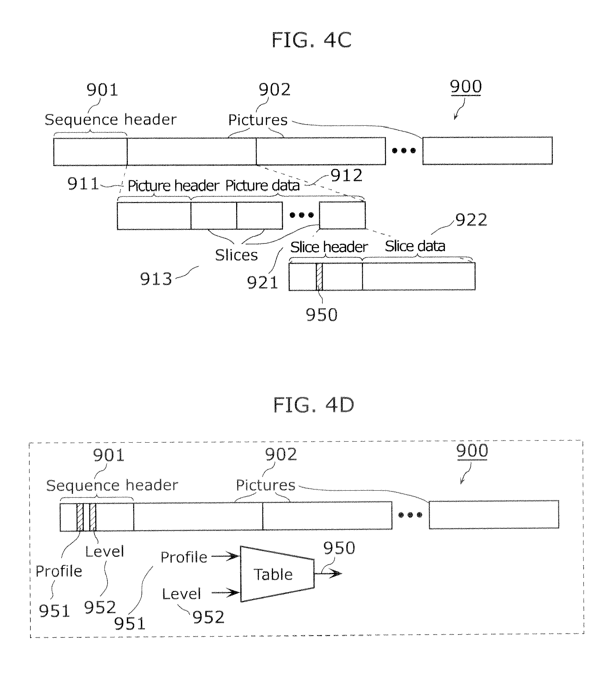

For example, the selection information 950 is included in the sequence header 901, as shown in FIG. 4A. As shown in FIG. 4B, the selection information 950 may be included in the picture header 911. As shown in FIG. 4C, the selection information 950 may be included in the slice header 921. For example, this selection information 950 is a binary flag that selectively indicates the value "0", which indicates the unconstrained intra prediction scheme and the value "1", which indicates the constrained intra prediction scheme.

Further, in the example shown in FIG. 4D, the selection information 950 is indicated by one of or both a profile parameter 951 and a level parameter 952 included in the sequence header 901. Specifically, the selection information 950 can be uniquely determined using a look-up table and one of or both the profile parameter 951 and the level parameter 952.

In this manner, with the moving picture coding method according to the present embodiment, the selection information 950 indicating which of the constrained intra prediction scheme and the unconstrained intra prediction scheme is used as an intra prediction scheme is coded in the header of the coded moving picture bitstream 900. Accordingly, a decoding apparatus can specify the used intra prediction scheme, using the selection information 950 in the header.

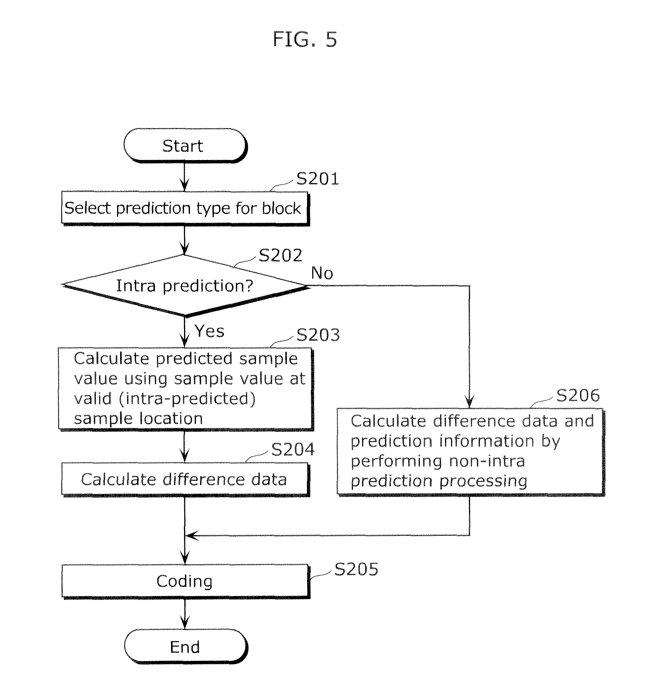

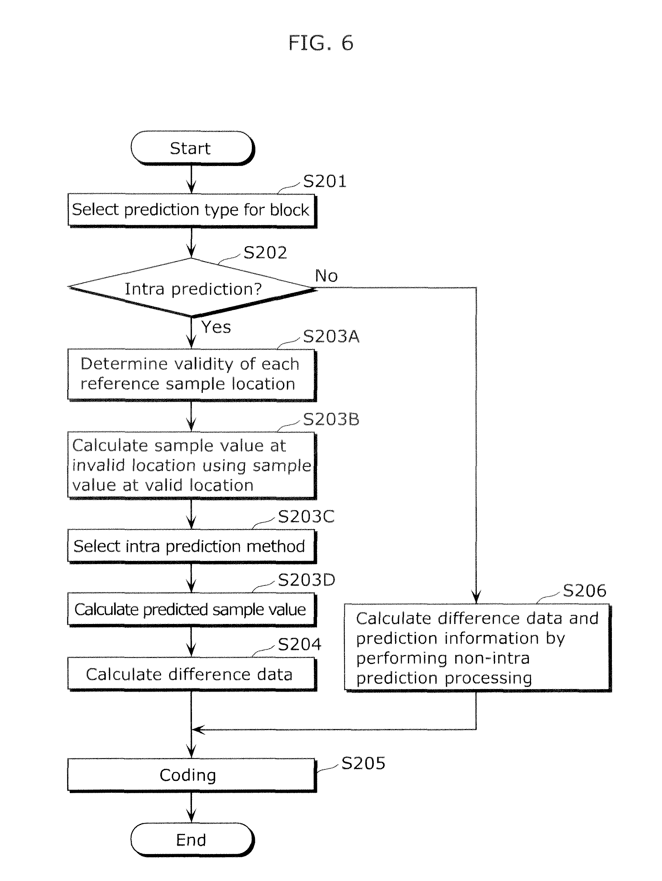

The following is a description of coding processing on each block using the constrained intra prediction scheme, using the flowcharts of FIGS.5 and 6.

First, in step S201, a prediction type used for a target block is selected. Conceivable prediction types include an intra prediction type and a non-intra prediction type. An example of the non-intra prediction type is a motion-compensated inter-picture prediction type (inter prediction type). Then, in step S202, it is determined which of the intra prediction type and the non-intra prediction type is selected as a prediction type used for the target block.

When the intra prediction type is selected (Yes in S202), the processing proceeds to step S203. In step S203, a predicted sample value is calculated by performing intra prediction on the target block among a plurality of blocks obtained as a result of division. Specifically, it is determined whether available reference samples are valid (intra-predicted) or invalid (non-intra predicted), and a predicted sample value is calculated by performing intra prediction using valid samples. More specifically, the validity of each of reference samples that are are located at least one of immediately above and immediately to the left of the target block is determined, and even when the reference samples include both a valid sample and an invalid sample, intra prediction is performed using the valid sample. It should be noted that the details of this processing will be described below.

Then, in step S204, intra difference data is calculated using the obtained predicted sample value. Specifically, difference data that represents the difference between the original picture of the target block and a predicted sample value is calculated.

On the other hand, when it is determined in step S202 that the non-intra prediction type is selected (No in S202), the processing proceeds to step S206. In step S206, non-intra difference data and prediction information are calculated by performing non-intra prediction.

After step S204 or step S206, a coded moving picture bitstream is generated by coding the difference data and the prediction information in step S205. Here, prediction information includes a signal indicating the selected prediction type. When the intra prediction type is used, the prediction information further includes a signal (the selection information 950) indicating the selected intra prediction method. Further, when the non-intra prediction type such as motion-compensated inter prediction is used, prediction information may further include signals indicating a motion vector, a reference picture index, and a motion vector resolution.

The following is a detailed description of processing in the above step S203 using FIG. 6. Step S203 shown in FIG. 5 includes steps S203A to S203D shown in FIG. 6.

The validity of reference sample locations is determined in step S203A. Specifically, it is determined whether reference samples are intra-predicted (valid) or non-intra-predicted (invalid).

Next, in step S203B, a complementary sample value which is a reference sample value at an invalid sample location is calculated using one or more valid sample values.

The following is a detailed description of processing for calculating such a complementary sample value.

According to an embodiment of the present invention, a complementary sample value is calculated by performing the processing below. First, one or more valid sample values are selected, and each of the selected valid sample values is multiplied by a predetermined scaling factor, thereby calculating scaling values. Next, a first sum total value that is a sum total of a plurality of scaling values obtained by the calculation is obtained, and a predetermined offset value is added to the obtained first sum total value, thereby calculating a second sum total value. Furthermore, the second sum total value obtained thereby is down-shifted by a predetermined shift step value, thereby obtaining a complementary sample value.

Here, a predetermined scaling factor, an offset value, and a shift step value may be determined using a look-up table based on factors such as the number and locations of valid and invalid samples.

The following describes an example of the calculation of a complementary sample value, using the case shown in FIG. 2 as an example. Reference sample values at invalid sample locations (12, -1), (13, -1), (14, -1), and (15, -1) shown in FIG. 2 are calculated by averaging reference sample values at (11, -1) and (16, -1). Specifically, an average value of valid sample values at two valid sample locations having an invalid sample location therebetween and closest to the invalid sample location may be calculated as a complementary sample value for the invalid sample location.

Further, two reference sample values can be averaged by performing the calculation shown by Expression 1 below with the predetermined scaling factor set to 1, the offset value set to 1, and the shift step value set to 1.

$$r(12, -1) = r(13, -1) = r(14, -1) = r(15, -1)$$
$$= (r(11, -1) + r(16, -1) + 1) >> 1 \quad \text{(Expression 1)}$$

Further, as another method, one of valid sample values is selected, and the selected valid sample value is determined as a complementary sample value. For example, a valid sample value at a valid sample location (11, -1) can be copied, as each reference sample value at invalid sample locations (12, -1), (13, -1), (14, -1), and (15, -1) shown in FIG. 2. Specifically, a valid sample value at the location closest to an invalid sample location may be determined as a complementary sample value for the invalid sample location.

Specifically, for example, a valid sample from which a copy is to be made can be selected by performing the processing below.

First, among all reference sample locations, a valid sample location found first in a search in a direction starting from a bottom-left reference sample location and ending at a top-right reference sample location is identified as a start reference sample location. Next, it is determined whether an invalid sample is located before or after the start reference sample location in a sample order that is the same as an order of samples in the search.

When the invalid sample is located before the start sample location, a sample at the start reference sample location is selected as a valid sample from which a copy is to be made. On the other hand, when the invalid sample is located after the start sample location, a valid sample before and closest to the invalid sample location is selected, in accordance with the sample order that is the same as the order of samples in the search, as a valid sample from which a copy is to be made.

As yet another method, a predetermined value may be simply assigned as a complementary sample value. This predetermined value is 128, for example.

Referring back to FIG. 6, a description is now given.

After a complementary sample value is calculated in step S203B, in step S203C, one intra prediction method is selected from among a plurality of intra prediction methods, using a valid sample value and the complementary sample value. Examples of the intra prediction methods include various intra prediction directions, such as a vertical direction and a horizontal direction.

Next, in step S203D, using the valid sample value and the complementary sample value, a predicted sample value is calculated in accordance with the intra prediction method selected in step S203C. According to the selected intra prediction method, different reference sample locations may be used, and different calculation processing may be used.

Further, in an embodiment of the present invention, step S203D in which a predicted sample value is calculated may include a step of prefiltering reference sample values, and a step of calculating a predicted sample value using a reference sample value obtained as a result of prefiltering. Here, prefiltering is processing of filtering a plurality of neighboring reference sample values.

As described above, the moving picture coding method according to Embodiment 1 of the present invention, when a plurality of reference samples that are located at least one of immediately above and immediately to the left of a target block include both a valid sample and an invalid sample, constrained intra prediction can be performed using the valid sample. Accordingly, the moving picture coding method enables more valid samples to be utilized, and thus coding efficiency can be improved.

In this manner, with the moving picture coding method according to the present embodiment, while obtaining the effect of error resistance, the complexity of calculation is maintained at the same level, and also resilient intra prediction can be performed at optimal efficiency. Accordingly, the moving picture coding method can improve coding efficiency.

The following is a description of a moving picture decoding method for decoding a coded moving picture bitstream generated using the above moving picture coding method.

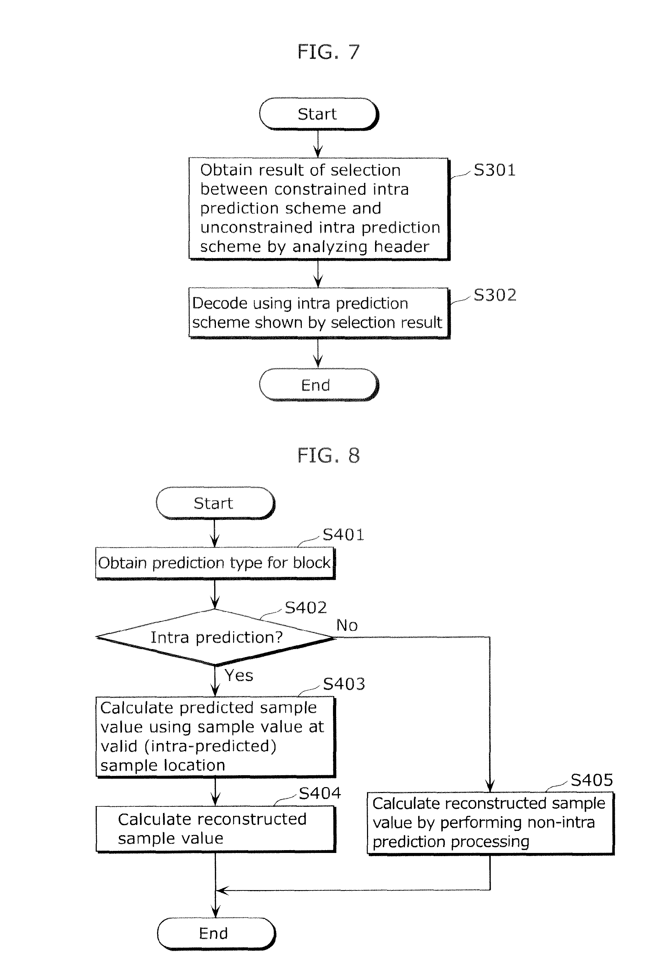

FIG. 7 is a flowchart showing moving picture decoding processing in Embodiment 1 of the present invention.

First, in step S301, the result of selection between the constrained intra prediction scheme and the unconstrained intra prediction scheme is obtained by analyzing the header of a coded moving picture bitstream.

Next, coding blocks in a picture are decoded in step S302. At this time, an intra-predicted coding block is decoded using the intra prediction scheme shown by the result of selection obtained in step S301.

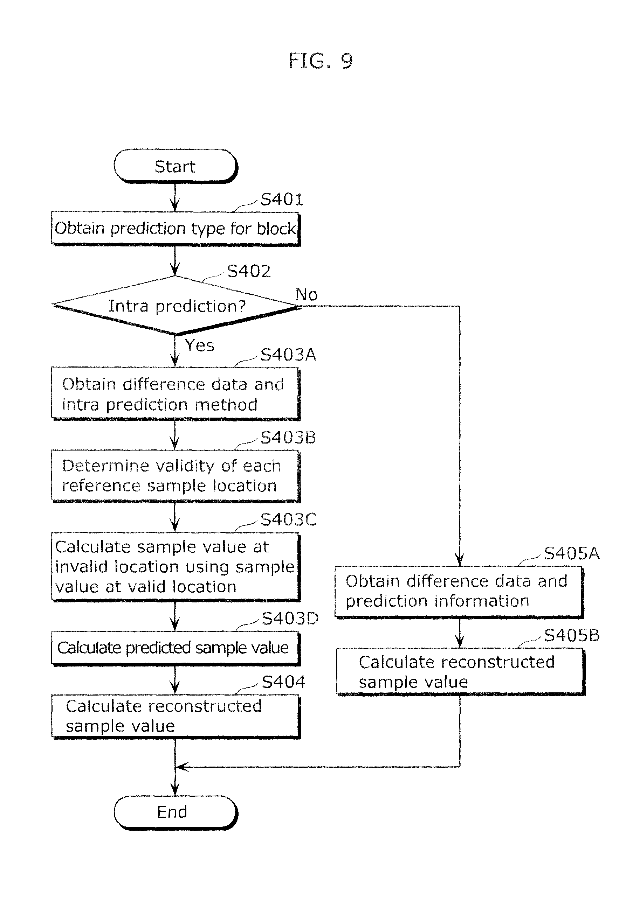

The following is a detailed description of processing of decoding each block using the constrained intra prediction scheme, using the flowchart shown in FIG. 9.

First, in step S401, the prediction type (intra prediction or non-intra prediction) of a coding block to be processed (hereinafter, target block) is obtained by analyzing a coded moving picture bitstream.

Next, in step S402, it is determined which of the intra prediction type and the non-intra prediction type is indicated by the prediction type obtained in step S401.

When the intra prediction type is used (Yes in S402), the processing proceeds to step S403.

In step S403, a predicted sample value of the target block is calculated by performing intra prediction on the target block. Specifically, it is determined whether available reference sample locations are valid (intra-predicted) or invalid (non-intra predicted), and a predicted sample value is calculated by performing intra prediction using an intra-predicted reference sample location. More specifically, the validity of each of reference samples that are located at least one of immediately above and immediately to the left of the target block is determined, and even when the reference samples include both a valid sample and an invalid sample, intra prediction is performed using the valid sample. It should be noted that the details of this processing will be described below.

Then, in step S404, a reconstructed intra-sample value is calculated using the calculated predicted sample value and intra difference data.

On the other hand, when it is determined in step S402 that the non-intra prediction type is used (No in S402), the processing proceeds to step S405. In step S405, a reconstructed sample value is calculated by performing non-intra prediction.

The following is a detailed description of processing of steps S403 and S405 described above, using FIG. 9. Step S403 shown in Fig. 8 includes steps S403A to S403D shown in FIG. 9. Step S405 shown in FIG. 8 includes steps S405A and S405B shown in FIG. 9.

In step S403A, intra difference data and an intra prediction method of the target block are obtained by analyzing, the coded moving picture bitstream.

Next, in step S403B, the validity of reference sample locations necessary for performing intra prediction processing in accordance with the intra prediction method obtained in step S403A is determined.

Next, in step S403C, a reference sample value (complementary sample value) at an invalid sample location is calculated, using a valid sample value.

Next, in step S403D, a predicted sample value is calculated using the valid sample value location and the complementary sample value.

Further, when it is determined in step S402 that the non-intra prediction type is used (No in S402), the processing proceeds to step S405A. In step S405A, non-intra difference data and prediction information are obtained by analyzing the coded moving picture bitstream. Then, in step S405B, a non-intra reconstructed sample value is calculated using the non-intra difference data and the prediction information obtained as a result of the analysis.

As described above, the moving picture decoding method according to Embodiment 1 of the present invention enables reconstructed data to be generated from a moving picture coded bitstream generated using the moving picture coding method described above.

The following is a description of a moving picture coding apparatus and a moving picture decoding apparatus using the above moving picture coding method and the above moving picture decoding method.

First is a description of a moving picture coding apparatus using the above moving picture coding method.

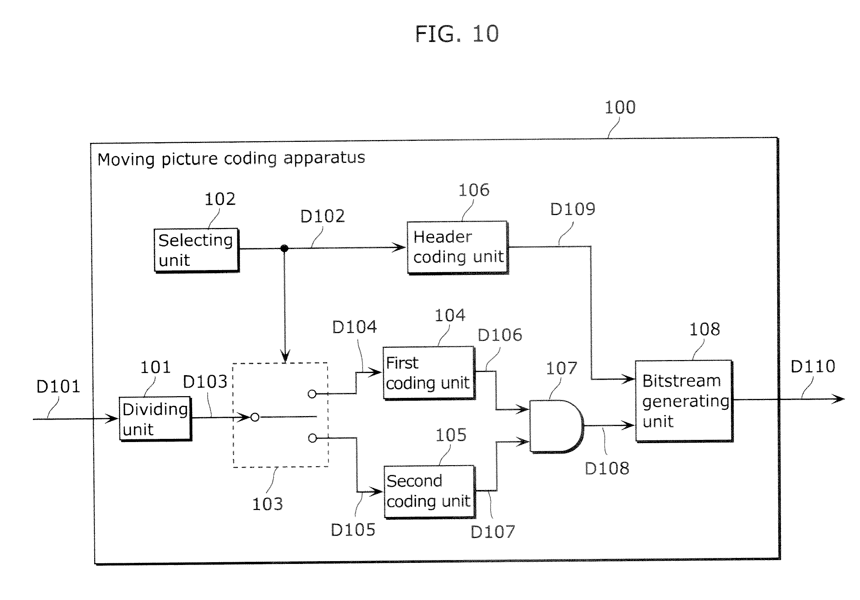

FIG. 10 is a block diagram showing an example of a moving picture coding apparatus 100 according to Embodiment 1 of the present invention. The moving picture coding apparatus 100 includes a dividing unit 101, a selecting unit 102, a switch unit 103, a first coding unit 104, a second coding unit 105, a header coding unit 106, a gate unit 107, and a bitstream generating unit 108.

The dividing unit 101 obtains an original picture D101, and divides the original picture D101 into variable-length-coding blocks D103.

The first selecting unit 601 selects one of the constrained intra prediction scheme and the unconstrained intra prediction scheme, and outputs selection information D102 indicating the selection result.

The switch unit 103 sends the variable-length-coding blocks D103 to the first coding unit 104 or the second coding unit 105, using the selection information D102. Specifically, when the selection information D102 indicates that the constrained intra prediction scheme is selected, the switch unit 103 outputs the variable-length-coding blocks D103 to the first coding unit 104 as variable-length-coding blocks D104. Further, when the selection information D102 indicates that the unconstrained intra prediction scheme is selected, the switch unit 103 outputs the variable-length-coding blocks D103 to the second coding unit 105 as variable-length-coding blocks D105.

The first coding unit 104 generates a coded bitstream D106 by coding the variable-length-coding blocks D104 using constrained intra prediction or non-intra prediction.

The second coding unit 105 generates a coded bitstream D107 by coding the variable-length-coding blocks D105 using non-constrained intra prediction or non-intra prediction.

In accordance with which of the coded bitstream D106 generated by the first coding unit 104 and the coded bitstream D107 generated by the second coding unit 105 is present, the gate unit 107 guides present data to the bitstream generating unit 108 as a coded bitstream D108.

The header coding unit 106 generates a coded bitstream D109 by coding the selection information D102.

The bitstream generating unit 108 generates a coded moving picture bitstream D110 by mixing the coded bitstream D108 and the coded bitstream D109.

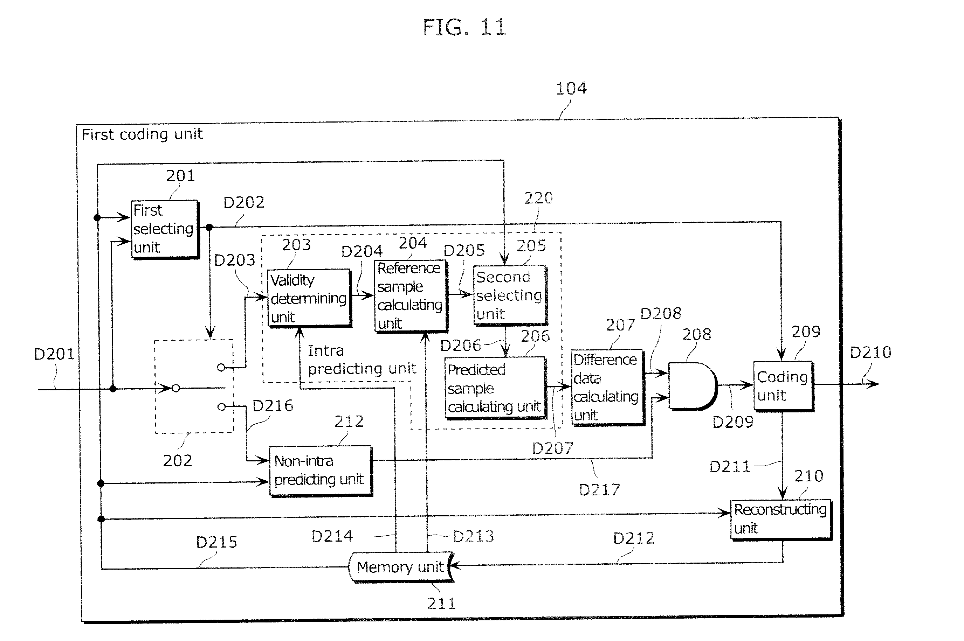

FIG. 11 is a block diagram showing an example of the first coding unit 104 that uses the constrained intra prediction scheme, in the moving picture coding apparatus 100 according to Embodiment 1 of the present invention. The first coding unit 104 includes a first selecting unit 201, a switch unit 202, an intra predicting unit 220, a difference data calculating unit 207, a gate unit 208, a coding unit 209, a reconstructing unit 210, a memory unit 211, and a non-intra predicting unit 212.

The first selecting unit 201 obtains a sample block D201 (one of the variable-length-coding blocks D104), and based on the sample block D201, selects one of the intra prediction type and the non-intra prediction type, and outputs a prediction type D202 indicating the selection result. Further, the first selecting unit 201 may obtain coding information D215 stored with respect to a sample that has already been coded, and select one of the intra prediction type and the non-intra prediction type, based on the obtained coding information D215. The coding information D215 indicates a prediction type, a quantization parameter, the dimension of a block, and the like, for example. This prediction type D202 is used to control the switch unit 103.

When the intra prediction type is selected, the switch unit 202 sends the sample block D201 to a validity determining unit 203 as a sample block D203.

The intra predicting unit 220 calculates a predicted sample value by performing intra prediction on a target block among a plurality of blocks obtained as a result of division. Further, the intra predicting unit 220 determines the validity of each of reference samples that are located at least one of immediately above and immediately to the left of the target block, and even when the reference samples include both a valid sample and an invalid sample, performs intra prediction using the valid sample. The intra predicting unit 220 includes the validity determining unit 203, a reference sample calculating unit 204, a second selecting unit 205, and a predicted sample calculating unit 206.

The validity determining unit 203 determines the validity of a reference sample locations, using the sample block D203, a prediction type D214 stored with respect to the reference sample location. Then, the validity determining unit 203 outputs data D204 including the original sample block D203 and the validity of the reference sample location to the reference sample calculating unit 204.

The reference sample calculating unit 204 calculates a complementary sample value that is a reference sample value at an invalid sample location, using the data D204 and a valid sample value D213. The reference sample calculating unit 204 outputs data D205 including the original sample block and the complementary sample value to the second selecting unit 205.

The second selecting unit 205 selects an intra prediction method D206 from among a plurality of intra prediction methods, using the data D205. Alternatively, the second selecting unit 205 may select the intra prediction method D206 using the coding information D215 stored with respect to a sample that has already been coded.

The predicted sample calculating unit 206 calculates a predicted sample value using input reference sample values (a valid sample value and a complementary sample value) based on the selected intra prediction method D206. Further, the predicted sample calculating unit 206 outputs data D207 including the original sample block, the selected intra prediction method, and the calculated predicted sample value to the difference data calculating unit 207.

The difference data calculating unit 207 calculates intra difference data using the predicted sample value and the original sample block, and outputs data D208 including the selected intra prediction method and the calculated intra difference data.

On the other hand, when a non-intra prediction type is selected, the switch unit 202 sends the original sample block D201 to the non-intra predicting unit 212 as a sample block D216.

The non-intra predicting unit 212 generates data D217 including the non-intra difference data and non-intra prediction information by performing non-intra prediction using the original sample block D216 and the coding information D215 stored with respect to a sample that has been coded.

The gate unit 208 sends available data to the coding unit 209 as data D209, according to which of the data D208 and the data D217 is available.

The coding unit 209 processes difference data included in the data D209, and also performs entropy coding on input data, thereby generating a coded moving picture bitstream D210 (coded bitstream D106). Examples of processing on difference data include conversion processing, scaling processing, and the like. Further, the coding unit 209 outputs data D211 including prediction information and the processed difference data to the reconstructing unit 210. Here, prediction information includes a selected prediction type and also includes the selected intra prediction method in the case of intra prediction.

The reconstructing unit 210 calculates a reconstructed sample value using the data D211 and the stored coding information D215, and stores data D212 including the reconstructed sample value and the prediction information in the memory unit 211.

Next is a description of the moving picture decoding apparatus using the above moving picture decoding method.

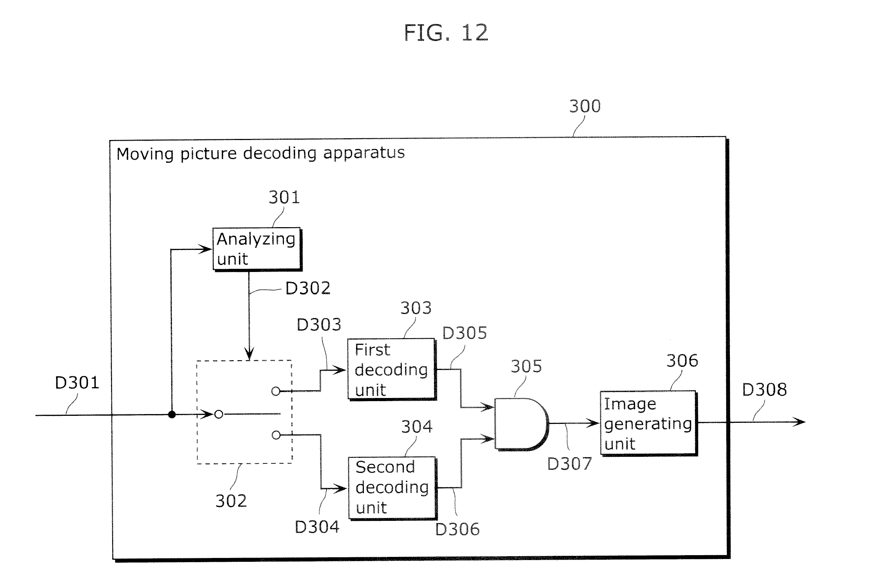

FIG. 12 is a block diagram showing an example of a moving picture decoding apparatus 300 according to Embodiment 1 of the present invention. The moving picture decoding apparatus 300 includes an analyzing unit 301, a switch unit 302, a first decoding unit 303, a second decoding unit 304, a gate unit 305, and an image generating unit 306.

The analyzing unit 301 obtains selection information D302 that indicates the result of selection between the constrained intra prediction scheme and the unconstrained intra prediction scheme, by analyzing the header of a coded moving picture bitstream D301.

The switch unit 302 sends the coded moving picture bitstream D301 to the first decoding unit 303 or the second decoding unit 304, based on the selected intra prediction scheme indicated by the selection information D302. Specifically, when the constrained intra prediction scheme is indicated by the selection information D302, the switch unit 302 outputs the coded moving picture bitstream D301 to the first decoding unit 303 as a bitstream D303. On the other hand, when the unconstrained intra prediction scheme is indicated by the selection information D302, the switch unit 302 outputs the coded moving picture bitstream D301 to the second decoding unit 304 as a bitstream D304.

The first decoding unit 303 generates reconstructed sample values D305 in block units by decoding the bitstream D303 using constrained intra prediction and non-intra prediction. The second decoding unit 304 generates reconstructed sample values D306 in block units by decoding the bitstream D304 using non-constrained intra prediction and non-intra prediction.

According to which of signals indicating the reconstructed sample values D305 and D306 is present, the gate unit 305 sends a present signal to the image generating unit 306 as reconstructed sample values D307.

The image generating unit 306 writes the reconstructed sample values D307 of the block in respective locations in a picture to be reconstructed, thereby generating a reconstructed picture D308.

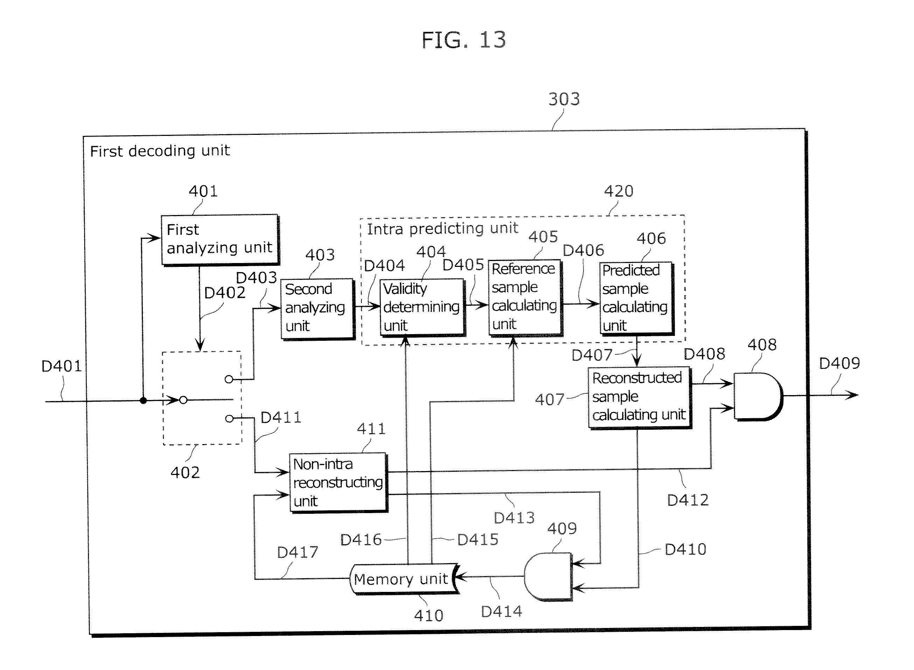

FIG. 13 is a block diagram showing an example of the first decoding unit 303 that uses the constrained intra prediction scheme in Embodiment 1 of the present invention. The first decoding unit 303 includes a first analyzing unit 401, a switch unit 402, a second analyzing unit 403, an intra predicting unit 420, a reconstructed sample calculating unit 407, a first gate unit 408, a second gate unit 409, a memory unit 410, and a non-intra reconstructing unit 411.

The first analyzing unit 401 obtains selection information D402 that indicates the result of selection between the intra prediction type and the non-intra prediction type by analyzing a coded moving picture bitstream D401.

When the selection result obtained as a result of the analysis indicates the intra prediction type, the switch unit 402 sends the coded moving picture bitstream D401 to the second analyzing unit 403 as a bitstream D403.

The second analyzing unit 403 obtains difference data and the intra prediction method by analyzing the bitstream D403. Then, the second analyzing unit 403 outputs analysis data D404 including the difference data and the intra prediction method obtained as a result of the analysis.

The intra predicting unit 420 calculates a predicted sample value of a target block by performing intra prediction on the target block. Further, the intra predicting unit 420 determines the validity of each of reference samples that are located at least one of immediately above and immediately to the left of the target block, and even when the reference samples include both a valid sample and an invalid sample, performs intra prediction using the valid sample. The intra predicting unit 420 includes a validity determining unit 404, a reference sample calculating unit 405, and a predicted sample calculating unit 406.

The validity determining unit 404 obtains, as inputs, the analysis data D404 and a prediction type D416 stored with respect to a reference sample location, and determines the validity of each reference sample location necessary for the intra prediction method obtained as a result of the analysis. The validity determining unit 404 outputs data D405 including the difference data and the intra prediction method obtained as a result of the analysis and the validity of the reference sample location to the reference sample calculating unit 405.

The reference sample calculating unit 405 calculates a reference sample value (complementary sample value) at an invalid sample location using the input data D405 and a valid sample value D415. Then, the reference sample calculating unit 405 outputs data D406 including the difference data and the intra prediction method obtained as a result of the analysis and the validity of the reference sample location to the predicted sample calculating unit 406.

The predicted sample calculating unit 406 calculates a predicted sample value in accordance with the intra prediction method obtained as a result of the analysis, using the data D406. Then, the predicted sample calculating unit 406 outputs data D407 including the difference data and the intra prediction method obtained as a result of the analysis and the predicted sample value to the reconstructed sample calculating unit 407.

The reconstructed sample calculating unit 407 calculates an intra reconstructed sample value D408 corresponding to a coding target block, using the data D407. Further, the reconstructed sample calculating unit 407 outputs data D410 including the intra reconstructed sample value, and the intra prediction type and the intra prediction method obtained as a result of the analysis.

On the other hand, when the selection result obtained as a result of the analysis indicates the non-intra prediction type, the switch unit 402 sends the coded moving picture bitstream D401 to the non-intra reconstructing unit 411 as a bitstream D411.

The non-intra reconstructing unit 411 calculates a reconstructed sample value D412 in accordance with the non-intra prediction type obtained as a result of the analysis, using the bitstream D411 and coding information D417 stored with respect to a sample that has already been coded. Further, the non-intra reconstructing unit 411 outputs data D413 including the non-intra reconstructed sample value and the non-intra prediction information obtained as a result of the analysis.

The first gate unit 408 sends available data as a reconstructed sample D409 of an output block, from among the reconstructed sample values D408 and D412. Similarly, the second gate unit 409 stores available data in the memory unit 410 as data D414, among the data D410 and the data D413.

[Embodiment 2]

Embodiment 2 of the present invention describes the case where a selective intra DC prediction scheme is used as the above constrained intra prediction scheme.

Specifically, with the selective intra DC prediction scheme, only a reference sample value at an intra-predicted reference sample location is used from among locations of a plurality of reference samples of neighboring clusters. Specifically, with this scheme, intra DC prediction processing is executed in consideration of whether or not neighboring clusters include a non-intra prediction reference sample.

Throughout this specification, the intra DC prediction scheme refers to an intra-picture prediction scheme that uses a single predicted sample value for all predicted samples in a coding target block. Reference samples of neighboring clusters refer to a group of neighboring samples arranged in the same direction with respect to a target block. There are four neighboring clusters to the target block, which are referred to as a top neighboring cluster, a top-right neighboring cluster, a left neighboring cluster, and a bottom-left neighboring cluster. In the example shown in FIG. 2, reference samples (16, -1) to (31, -1) belonging to Blocks A and B are reference samples of a top-right neighboring cluster. Similarly, reference samples (0, -1) to (15, -1) belonging to Blocks C, D, and E are reference samples of a top neighboring cluster. Reference samples (-1, 0) to (-1, 15) belonging to Block G are reference samples of a left neighboring cluster. Reference samples (-1, 16) to (-1, 31) belonging to Blocks J, H, and I are reference samples of a bottom-left neighboring cluster.

Further, in contrast to the selective intra DC prediction scheme of the present invention, this specification uses "a non-selective intra DC prediction scheme" to refer to the conventional-technique intra DC prediction scheme for performing intra DC prediction processing using both an intra-predicted reference sample value and a non-intra predicted reference sample value.

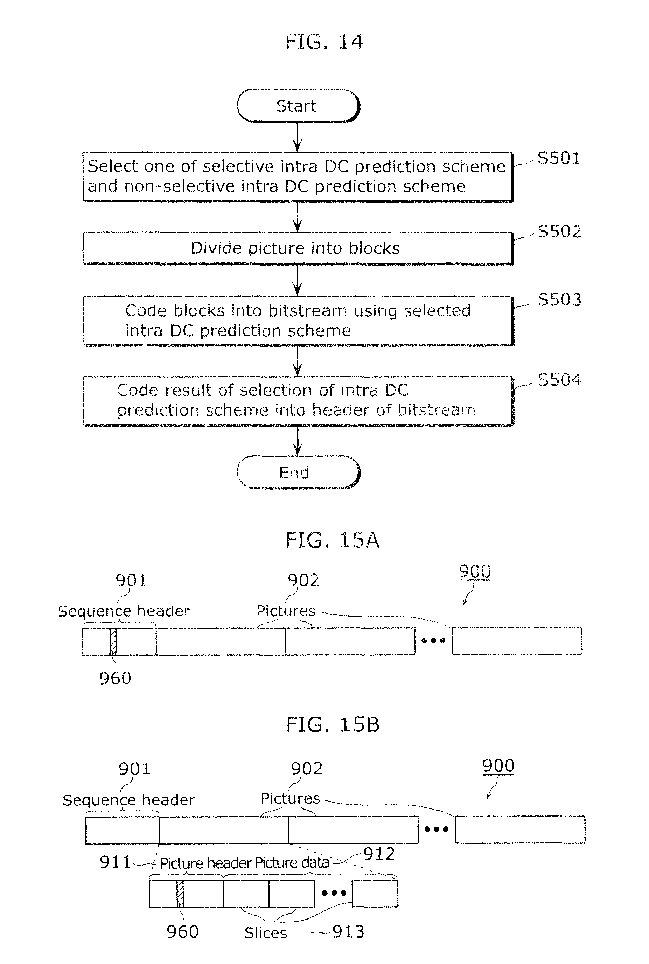

FIG. 14 is a flowchart showing moving picture decoding processing according to Embodiment 2 of the present invention.

First, in step S501, one of the non-selective intra DC prediction scheme and the selective intra DC prediction scheme is selected as an intra DC prediction scheme.

Next, in step S502, a target original picture is divided into one or more coding target blocks. An example of the coding target block is a two-dimensional block including 32 x 32 original image samples.

Next, in step S503, a coded moving picture bitstream is generated by coding the obtained coding target blocks. Further, in step S503, when the target blocks are coded using the intra DC prediction method, the intra DC prediction scheme selected in step S501 is used.

At last, in step S504, the result of selection between the non-selective intra DC prediction scheme and the selective intra DC prediction scheme made in step S501 is coded in the header of the coded moving picture bitstream.

FIGS. 15A to 15D show a location at which selection information 960 is arranged in a coded moving picture bitstream 900 generated using the above moving picture coding method. The selection information 960 is information indicating which of the non-selective intra DC prediction scheme and the selective intra DC prediction scheme is used as the intra DC prediction scheme.

It should be noted that the data configuration shown in FIGS. 15A to 15D is the same as the configuration shown in FIGS. 4A to 4D.

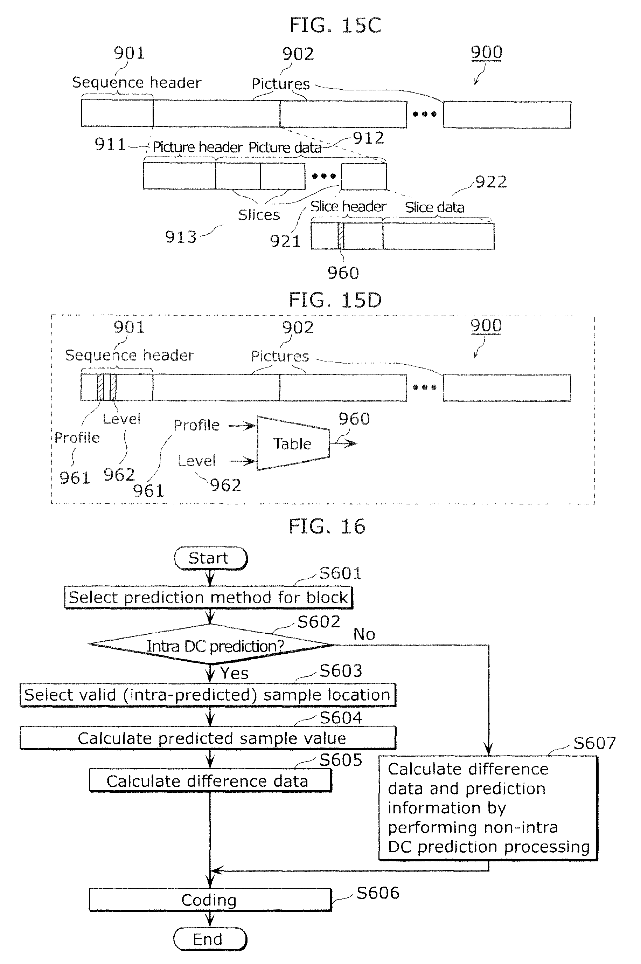

For example, as shown in FIG. 15A, the selection information 960 is included in the sequence header 901. As shown in FIG. 15B, the selection information 960 may be included in a picture header 911. As shown in FIG. 15C, the selection information 960 may be included in a slice header 921. For example, this selection information 960 is a binary flag that selectively shows the value "0" indicating the non-selective intra DC prediction scheme and the value "1" indicating the selective intra DC prediction scheme.

Further, in the example shown in FIG. 15D, the selection information 960 is indicated by one of or both a profile parameter 961 and a level parameter 962 that are included in the sequence header 901. Specifically, the selection information 960 can be uniquely determined using a look-up table and one of or both the profile parameter 961 and the level parameter 962.

As described above, with the moving picture coding method according to the present embodiment, the selection information 960 indicating which of the selective intra DC prediction scheme and the non-selective intra DC prediction scheme is used as the intra DC prediction scheme is coded in the header of the coded moving picture bitstream 900. Thus, the decoding apparatus can specify the used intra prediction scheme, using the selection information 960 in the header.

The following is a description of processing of coding each block using the selective intra DC prediction scheme, using the flowchart shown in FIG. 16.

First, in step S601, a prediction method to be used for a target block is selected. Conceivable prediction methods include the intra DC prediction method and the non-intra DC prediction method. Furthermore, the non-intra DC prediction methods include intra prediction methods other than intra DC and various inter-picture prediction methods. Then, in step S602, it is determined which of the intra DC prediction method and the non-intra DC prediction method is selected.

When the intra DC prediction scheme is selected (Yes in S602), the processing proceeds to step S603. In step S603, some intra-predicted reference sample locations are selected.

Next, in step S604, an intra DC predicted sample value is calculated using the selected reference sample locations. Then, in step S605, difference data is calculated using the intra DC predicted sample value.

In an embodiment of the selective intra DC prediction scheme of the present invention, all intra-predicted reference sample values are selected from among reference sample values of all neighboring clusters, to calculate an intra DC predicted sample value. In the example shown in FIG. 2, an intra DC predicted sample value is calculated using all 52 reference samples, namely, (16, -1) to (31, -1), (0, -1) to (11, -1), and (-1, 0) (-1, 23).

It should be noted that in another embodiment of the selective intra DC prediction scheme, intra-predicted reference sample values are selected from top reference samples and left reference samples, and thereafter an intra DC predicted sample value is calculated. In the same example in FIG. 2, an intra DC prediction sample is calculated using all 28 reference samples, namely, (0, -1) to (11, -1), and (-1, 0) (-1, 15).

According to an embodiment of the present invention, a predicted sample value is calculated by performing the processing below.

First, one or more valid samples are selected as selected samples. Next, the number of selected samples is specified. Next, a scaling factor, an offset value, and a shift step value are selected using a look-up table, in accordance with the number of selected samples. Next, a first sum total value that is the sum total of the values of the selected samples is calculated. Next, a scaling value is calculated by multiplying the first sum total value by the selected scaling factor. Next, a second sum total value that is the sum of the selected offset value and the selected scaling value is calculated. At last, each value of all predicted sample values of a target block is generated by down-shifting the second sum total value by the selected shift step value.

Further, in another embodiment of the selective intra DC prediction scheme, a reference sample value at one reference sample location, for example, the reference sample value such as (0, -1) shown in FIG. 2 is used for all the intra DC predicted sample values of a target block.

Further, in yet another embodiment of the selective intra DC prediction scheme, a predetermined constant value (for example, 128) is used for all intra DC sample values of a target block.

On the other hand, when it is determined in step S602 that the non-intra DC prediction method is selected (No in S602), the processing proceeds to step S607. In step S607, non-intra difference data and prediction information are obtained by performing non-intra DC prediction processing.

At last, in step S606, difference data and prediction information generated in step S605 or S607 is coded into a coded moving picture bitstream. Here, prediction information includes a signal indicating the selected prediction method.

As described above, with the moving picture coding method according to Embodiment 2 of the present invention, when a plurality of reference samples that are located at least one of immediately above and immediately to the left of a target block include both a valid sample and an invalid sample, selective intra DC prediction can be performed using the valid sample. Accordingly, with the moving picture coding method, more valid samples can be utilized, and thus coding efficiency can be improved.

In this manner, with the moving picture coding method according to the present embodiment, while obtaining the effect of error resistance, the complexity of calculation is maintained at the same level, and also resilient intra prediction can be performed at optimal efficiency. Accordingly, the moving picture coding method enables improvement in coding efficiency.

The following is a description of a moving picture decoding method for decoding a coded moving picture bitstream generated using the above moving picture coding method.

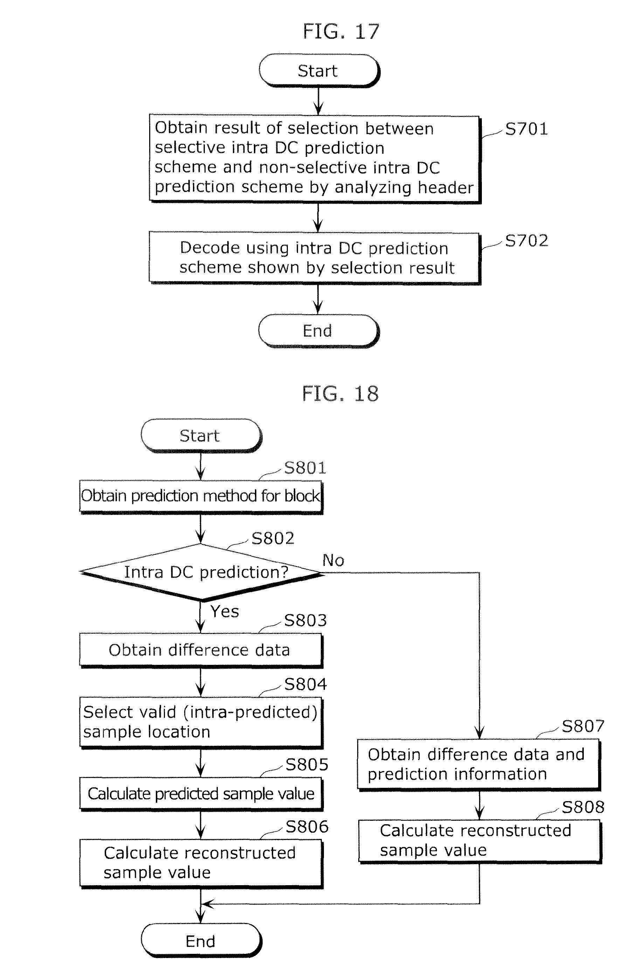

FIG. 17 is a flowchart for describing moving picture decoding processing according to Embodiment 2 of the present invention.

First, in step S701, the result of selection between the non-selective intra DC prediction scheme and the selective intra DC prediction scheme is obtained by analyzing the header of a coded moving picture bitstream. Next, coding blocks in a picture are decoded in step S702. At this time, intra DC predicted coding blocks are decoded using the intra DC prediction scheme shown by the selection result obtained in step S701.

The following is a description of processing of decoding each block using the selective intra DC prediction scheme, using the flowchart shown in FIG. 18.

First, in step S801, a prediction method for a coding target block is obtained by analyzing a coded moving picture bitstream. Then, it is determined in step S802 which of the intra DC prediction method and the non-intra DC prediction method is indicated by the prediction scheme obtained as a result of the analysis.

When the intra DC prediction method is used (Yes in S802), the processing proceeds to step S803. In step S803, intra DC difference data of a coding target block is obtained by analyzing the coded moving picture bitstream. Next, in step S804, some intra-predicted reference sample locations are selected.

Next, in step S805, an intra DC predicted sample value is calculated using the selected reference sample locations. Then, in step S806, a reconstructed sample value is calculated using the intra DC predicted sample value and the difference data obtained as a result of the analysis.

On the other hand, when the non-intra DC prediction method is used (No in S802), the processing proceeds to step S807. In step S807, non-intra DC difference data and prediction information are obtained by analyzing the coded moving picture bitstream. Then, in step S808, a reconstructed sample value is calculated using the non-intra DC difference data obtained as a result of the analysis and the prediction information.

As described above, with the moving picture decoding method according to Embodiment 2 of the present invention, reconstructed data can be generated from a moving picture coded bitstream generated using the moving picture coding method described above.

The following is a description of a moving picture coding apparatus and a moving picture decoding apparatus using the above moving picture coding method and the moving picture decoding method.

First is a description of a moving picture coding apparatus using the above moving picture coding method.

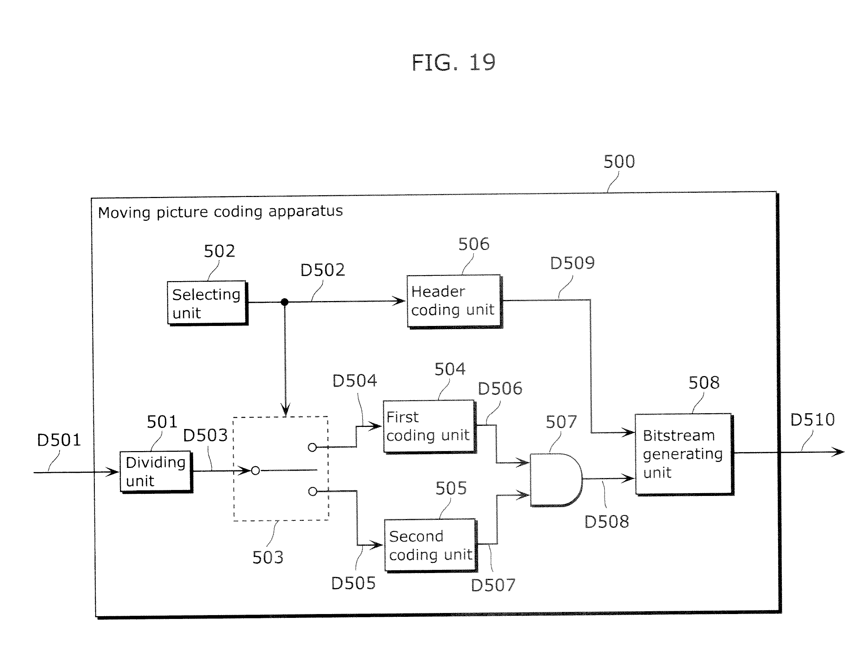

FIG. 19 is a block diagram showing an example of a moving picture coding apparatus 500 according to Embodiment 2 of the present invention. The moving picture coding apparatus 500 includes a dividing unit 501, a selecting unit 502, a switch unit 503, a first coding unit 504, a second coding unit 505, a header coding unit 506, a gate unit 507, and a bitstream generating unit 508.

The dividing unit 501 obtains an original picture D501, and divides the obtained original picture D501 into variable-length-coding blocks D503.

The selecting unit 502 selects one of the non-selective intra DC prediction scheme and the selective intra DC prediction scheme, and outputs selection information D502 indicating the selection result.

The switch unit 503 sends the variable-length-coding blocks D503 to the first coding unit 504 or the second coding unit 505, using this selection information D502. Specifically, when the selection information D502 indicates that the selective intra DC prediction scheme is selected, the switch unit 503 outputs the variable-length-coding blocks D503 to the first coding unit 504 as variable-length-coding blocks D504. Further, when the selection information D502 indicates that the non-selective intra DC prediction scheme is selected, the switch unit 503 outputs the variable-length-coding blocks D503 to the second coding unit 505 as variable-length-coding blocks D505.

The first coding unit 504 generates a coded bitstream D506 by coding the variable-length-coding blocks D504 using the selective intra DC prediction or the non-intra DC prediction.

The second coding unit 505 generates a coded bitstream D507 by coding the variable-length-coding blocks D505 using the non-selective intra DC prediction or the non-intra DC prediction.

In accordance with which of the data is present, namely, the coded bitstream D506 generated by the first coding unit 504 and the coded bitstream D507 generated by the second coding unit 505, the gate unit 507 guides the present data to the bitstream generating unit 508 as a coded bitstream D508.

The header coding unit 506 generates a coded bitstream D509 by coding the selection information D502.

The bitstream generating unit 508 generates a coded moving picture bitstream D510 by mixing the coded bitstream D509 and the coded bitstream D508.

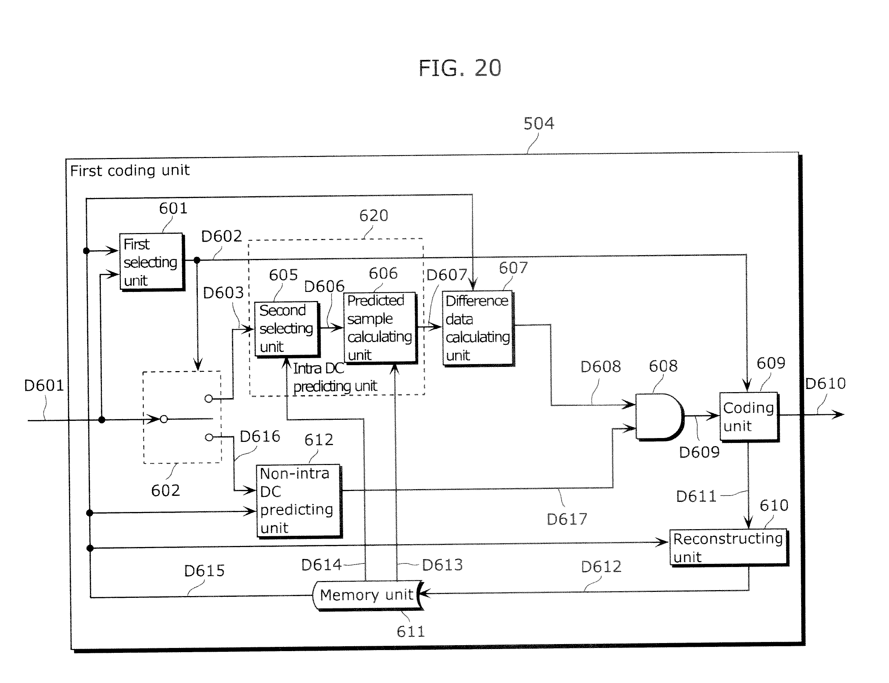

FIG. 20 is a block diagram showing an example of the first coding unit 504 in the moving picture coding apparatus 500 according to Embodiment 2 of the present invention. The first coding unit 504 includes a first selecting unit 601, a switch unit 602, an intra DC predicting unit 620, a difference data calculating unit 607, a gate unit 608, a coding unit 609, a reconstructing unit 610, a memory unit 611, and a non-intra DC predicting unit 612.

The first selecting unit 601 obtains a sample block D601 (one of the variable-length-coding blocks D504), selects one of the intra DC prediction method and the non-intra DC prediction method based on the sample block D601, and outputs a prediction type D602 indicating the result of selection. Alternatively, the first selecting unit 601 may obtain coding information D615 stored with respect to a sample that has already been coded, and select one of the intra DC prediction method and the non-intra DC prediction method based on the obtained coding information D615. The coding information D615 indicates a prediction method, a quantization parameter, a dimension of a block, and the like, for example. The prediction type D602 is used to control the switch unit 602.

When the intra DC prediction method is selected, the switch unit 602 sends the original sample block D601 to a second selecting unit 605 as a sample block D603.

The intra DC predicting unit 620 calculates a predicted sample value by performing intra DC prediction on a target block among a plurality of blocks obtained as a result of the division. Further, the intra DC predicting unit 620 determines the validity of each of reference samples that are located at least one of immediately above and immediately to the left of the target block, and even when the reference samples include both a valid sample and an invalid sample, performs intra prediction using the valid sample. The intra DC predicting unit 620 includes a second selecting unit 605 and a predicted sample calculating unit 606.

The second selecting unit 605 selects some intra-predicted valid sample locations using a prediction type D614 stored with respect to a reference sample location. The prediction type D614 indicates the result of selection between the intra prediction type and the non-intra prediction type. Then, the second selecting unit 605 outputs data D606 including the original sample block and the selected valid sample locations to the predicted sample calculating unit 606.

The predicted sample calculating unit 606 calculates an intra DC predicted sample value using the input data D606 and valid sample values D613 at the selected valid sample locations. Then, the predicted sample calculating unit 606 outputs data D607 including the original sample block and the intra DC predicted sample value to the difference data calculating unit 607.

The difference data calculating unit 607 calculates data D608 including intra DC difference data using the intra DC predicted sample value and the original sample block.

On the other hand, when the non-intra DC prediction method is selected, the switch unit 602 sends the original sample block D601 to the non-intra DC predicting unit 612 as a sample block D616.

The non-intra DC predicting unit 612 generates data D617 including non-intra DC difference data and non-intra DC prediction information, using the original sample block D616 and the coding information D615 stored with respect to a sample that has already been coded.

The gate unit 608 sends available data to the coding unit 609 as data D609, according to which of the data D608 and the data D617 is available.

The coding unit 609 processes difference data included in the data D609, and also performs entropy coding on the input data, thereby generating a coded moving picture bitstream D610 (the coded bitstream D506). Examples of processing on difference data include conversion processing, scaling processing, and the like. Further, the coding unit 609 outputs data D611 including prediction information and the processed difference data to the reconstructing unit 610. Here, prediction information includes the prediction type of the target block.

The reconstructing unit 610 calculates a reconstructed sample value using the data D611 and the stored coding information D615, and stores data D612 including the reconstructed sample value and the prediction information in the memory unit 611.

Next is a description of a moving picture decoding apparatus using the above moving picture decoding method.

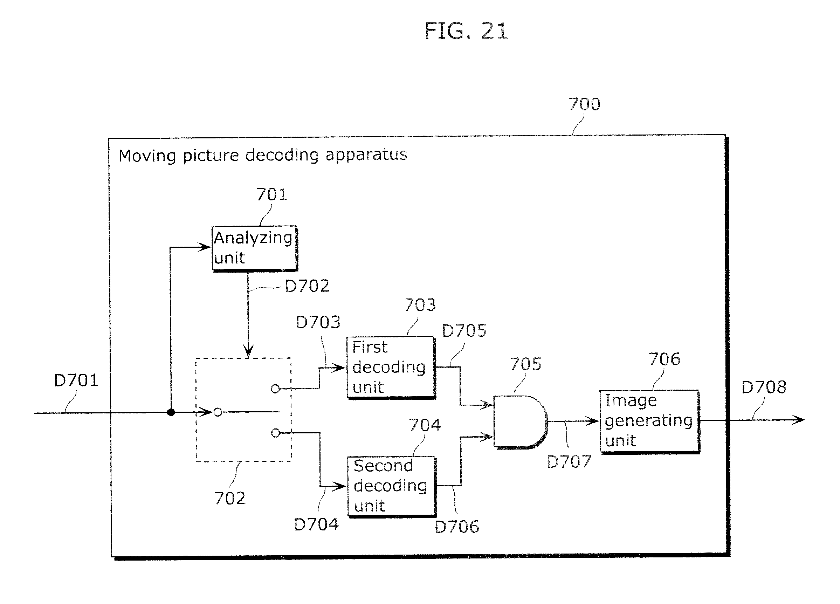

FIG. 21 is a block diagram showing an example of a moving picture decoding apparatus 700 according to Embodiment 2 of the present invention. The moving picture decoding apparatus 700 includes an analyzing unit 701, a switch unit 702, a first decoding unit 703, a second decoding unit 704, a gate unit 705, and an image generating unit 706.

The analyzing unit 701 obtains selection information D702 indicating the result of selection between the non-selective intra DC prediction scheme and the selective intra DC prediction scheme by analyzing the header of a coded moving picture bitstream D701.

The switch unit 702 sends the coded moving picture bitstream D701 to the first decoding unit 703 or the second decoding unit 704, based on the selected intra DC prediction scheme. Specifically, when the selective intra DC prediction scheme is indicated by the selection information D702, the switch unit 702 outputs the coded moving picture bitstream D701 to the first decoding unit 703 as a bitstream D703. On the other hand, when the non-selective intra DC prediction scheme is indicated by the selection information D702, the switch unit 702 outputs the coded moving picture bitstream D701 to the second decoding unit 704 as a bitstream D704.

The first decoding unit 703 generates reconstructed sample values D705 in block units by decoding the bitstream D703 using the selective intra DC prediction and the non-intra DC prediction. The second decoding unit 704 generates reconstructed sample values D706 in block units by decoding the bitstream D704 using the non selection intra DC prediction and the non-intra DC prediction.

According to which of signals indicating the reconstructed sample values D705 and D706 is present, the gate unit 705 sends the present signal to the image generating unit 706 as reconstructed sample values D707.

The image generating unit 706 generates a reconstructed picture D708 by writing the reconstructed sample values D707 of a current block in respective locations of a picture to be reconstructed.

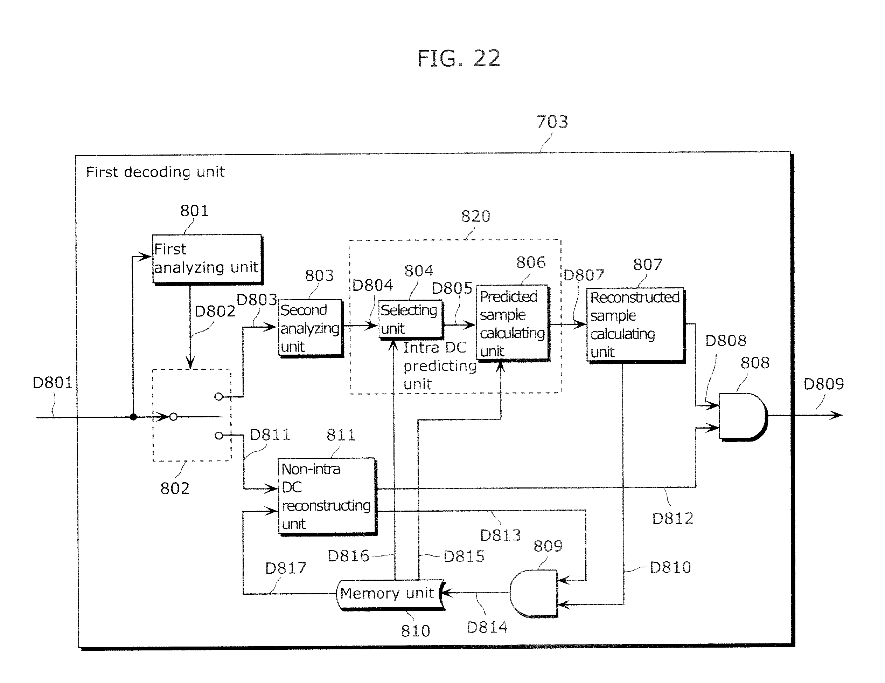

FIG. 22 is a block diagram showing an example of the first decoding unit 703 that uses the selective intra DC prediction scheme in Embodiment 2 of the present invention. The first decoding unit 703 includes a first analyzing unit 801, a switch unit 802, a second analyzing unit 803, an intra DC predicting unit 820, a reconstructed sample calculating unit 807, a first gate unit 808, a second gate unit 809, a memory unit 810, and a non-intra DC reconstructing unit 811.

The first analyzing unit 801 obtains selection information D802 indicating the result of selection between the intra DC prediction method and the non-intra DC prediction method by analyzing a coded moving picture bitstream D801.

When the selection result obtained as a result of the analysis shows the intra DC prediction method, the switch unit 802 sends the coded moving picture bitstream D801 to the second analyzing unit 803 as a bitstream D803.

The second analyzing unit 803 obtains intra DC difference data D804 with respect to a coding target block by analyzing the bitstream D803.

The intra DC predicting unit 820 calculates a predicted sample value by performing intra DC prediction on the target block among a plurality of blocks obtained as a result of division. Further, the intra DC predicting unit 820 determines the validity of each of reference samples that are located at least one of immediately above and immediately to the left of the target block, and even when the reference samples include both a valid sample and an invalid sample, performs intra prediction using the valid sample. The intra DC predicting unit 820 includes a selecting unit 804 and a predicted sample calculating unit 806.

The selecting unit 804 selects some intra-predicted valid sample locations using a prediction type D816 stored with respect to each reference sample location. Here, the prediction type D816 indicates the result of selection between the intra prediction type and the non-intra prediction type. Then, the selecting unit 804 outputs data D805 including difference data D804 obtained as a result of the analysis and the selected valid sample locations to the predicted sample calculating unit 806.

The predicted sample calculating unit 806 calculates an intra DC predicted sample value using input data D805 and valid sample values D815 at the selected valid sample locations. Then, the predicted sample calculating unit 806 outputs data D807 including the difference data obtained as a result of the analysis and the intra DC predicted sample value to the reconstructed sample calculating unit 807.

The reconstructed sample calculating unit 807 calculates an intra DC reconstructed sample value D808 for the coding target block using the data D807. Further, the reconstructed sample calculating unit 807 outputs data D810 including the intra reconstructed sample value and the prediction method obtained as a result of the analysis.

On the other hand, when the selection result obtained as a result of the analysis indicates the non-intra DC prediction method, the switch unit 802 sends the coded moving picture bitstream D801 to the non-intra DC reconstructing unit 811 as a bitstream D811.

The non-intra DC reconstructing unit 811 calculates a reconstructed sample value D812 in accordance with the non-intra DC prediction method obtained as a result of the analysis, using the bitstream D811 and coding information D817 stored with respect top a sample that has already been coded. Further, the non-intra DC reconstructing unit 811 outputs data D813 including the non-intra DC reconstructed sample value and the non-intra DC prediction information obtained as a result of the analysis.

The first gate unit 808 sends available data among the reconstructed sample values D808 and D812 as a reconstructed sample D809 of an output block. Similarly, the second gate unit 809 stores, in the memory unit 810, available data among the data D810 and the data D813, as data D814.

The above is a description of the moving picture coding method, the moving picture decoding method, the moving picture coding apparatus, and the moving picture decoding apparatus according to the embodiments of the present invention, the present invention is not limited to the embodiments.

For example, the present invention may be realized as a moving picture coding and decoding apparatus including the above moving picture coding apparatus and the above moving picture decoding apparatus.

Further, at least some of the functions of the moving picture coding method, the moving picture decoding method, the moving picture coding apparatus, and the moving picture decoding apparatus according to the above embodiments and the modifications thereof may be combined.

Further, division of the functional blocks in the block diagrams is an example, and a plurality of functional blocks may be realized as a single functional a block, a single functional block may be divided into a plurality of blocks, or some of the functions may be transferred to another functional block. In addition, single hardware or software may process the functions of a plurality of functional blocks that have similar functions in a parallel or time sharing manner.

The order of executing the above steps is for illustrating a specific description of the present invention, and may be the order other than the above order. Further, some of the above steps may be executed simultaneously (in parallel) with other steps.

[Embodiment 3]

The processing described in each of Embodiments can be simply implemented in an independent computer system, by recording, in a recording medium, a program for implementing the configurations of the moving picture coding method (image coding method) and the moving picture decoding method (image decoding method) described in each of Embodiments. The recording media may be any recording media as long as the program can be recorded, such as a magnetic disk, an optical disk, a magnetic optical disk, an IC card, and a semiconductor memory.

Hereinafter, the applications to the moving picture coding method (image coding method) and the moving picture decoding method (image decoding method) described in each of Embodiments and systems using thereof will be described. The system has a feature of having an image coding and decoding apparatus that includes an image coding apparatus using the image coding method and an image decoding apparatus using the image decoding method. Other configurations in the system can be changed as appropriate depending on the cases.

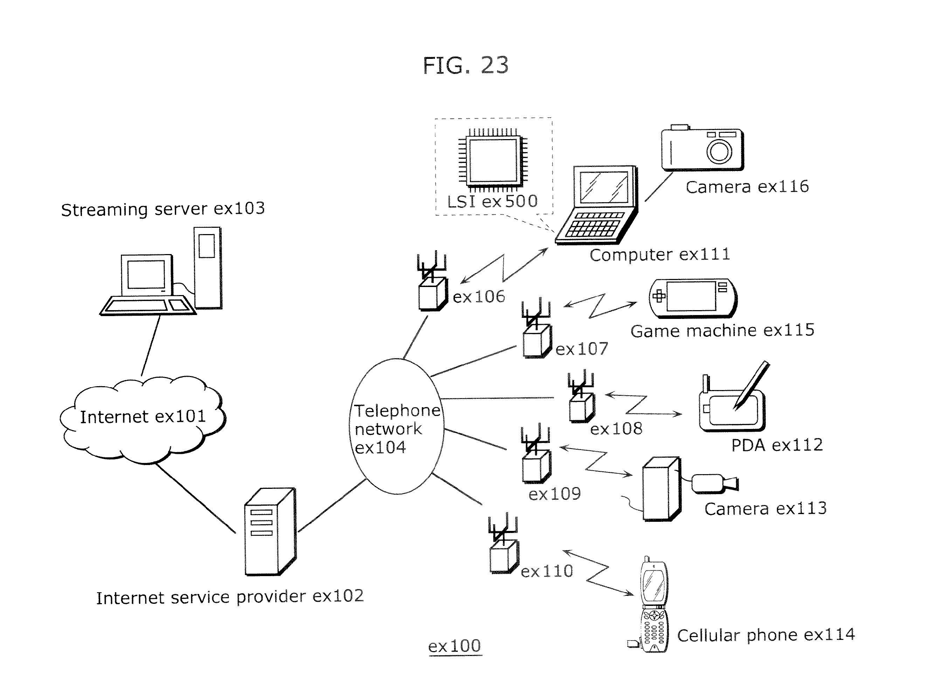

FIG. 23 illustrates an overall configuration of a content providing system ex100 for implementing content distribution services. The area for providing communication services is divided into cells of desired size, and base stations ex106, ex107, ex108, ex109, and ex110 which are fixed wireless stations are placed in each of the cells.

The content providing system ex100 is connected to devices, such as a computer ex111, a personal digital assistant (PDA) ex112, a camera ex113, a cellular phone ex114 and a game machine ex115, via the Internet ex101, an Internet service provider ex102, a telephone network ex104, as well as the base stations ex106 to ex110, respectively.

However, the configuration of the content providing system ex100 is not limited to the configuration shown in FIG. 23, and a combination in which any of the elements are connected is acceptable. In addition, each device may be directly connected to the telephone network ex104, rather than via the base stations ex106 to ex110 which are the fixed wireless stations. Furthermore, the devices may be interconnected to each other via a short distance wireless communication and others.

The camera ex113, such as a digital video camera, is capable of capturing video. A camera ex116, such as a digital video camera, is capable of capturing both still images and video. Furthermore, the cellular phone ex114 may be the one that meets any of the standards such as Global System for Mobile Communications (GSM) (registered trademark), Code Division Multiple Access (CDMA), Wideband-Code Division Multiple Access (W-CDMA), Long Term Evolution (LTE), and High Speed Packet Access (HSPA). Alternatively, the cellular phone ex114 may be a Personal Handyphone System (PHS).

In the content providing system ex100, a streaming server ex103 is connected to the camera ex113 and others via the telephone network ex104 and the base station ex109, which enables distribution of images of a live show and others. In such a distribution, a content (for example, video of a music live show) captured by the user using the camera ex113 is coded as described above in each of Embodiments (i.e., the camera functions as the image coding apparatus in the present invention), and the coded content is transmitted to the streaming server ex103. On the other hand, the streaming server ex103 carries out stream distribution of the transmitted content data to the clients upon their requests. The clients include the computer ex111, the PDA ex112, the camera ex113, the cellular phone ex114, and the game machine ex115 that are capable of decoding the above-mentioned coded data. Each of the devices that have received the distributed data decodes and reproduces the coded data (i.e., functions as the image decoding apparatus in the present invention).

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and video captured by not only the camera ex113 but also the camera ex116 may be transmitted to the streaming server ex103 through the computer ex111. The coding processes may be performed by the camera ex116, the computer ex111, or the streaming server ex103, or shared among them.

Furthermore, the coding and decoding processes may be performed by an LSI ex500 generally included in each of the computer ex111 and the devices. The LSI ex500 may be configured of a single chip or a plurality of chips. Software for coding and decoding video may be integrated into some type of a recording medium (such as a CD-ROM, a flexible disk, and a hard disk) that is readable by the computer ex111 and others, and the coding and decoding processes may be performed using the software. Furthermore, when the cellular phone ex114 is equipped with a camera, the image data obtained by the camera may be transmitted. The video data is data coded by the LSI ex500 included in the cellular phone ex114.

Furthermore, the streaming server ex103 may be composed of servers and computers, and may decentralize data and process the decentralized data, record, or distribute data.

As described above, the clients may receive and reproduce the coded data in the content providing system ex100. In other words, the clients can receive and decode information transmitted by the user, and reproduce the decoded data in real time in the content providing system ex100, so that the user who does not have any particular right and equipment can implement personal broadcasting.

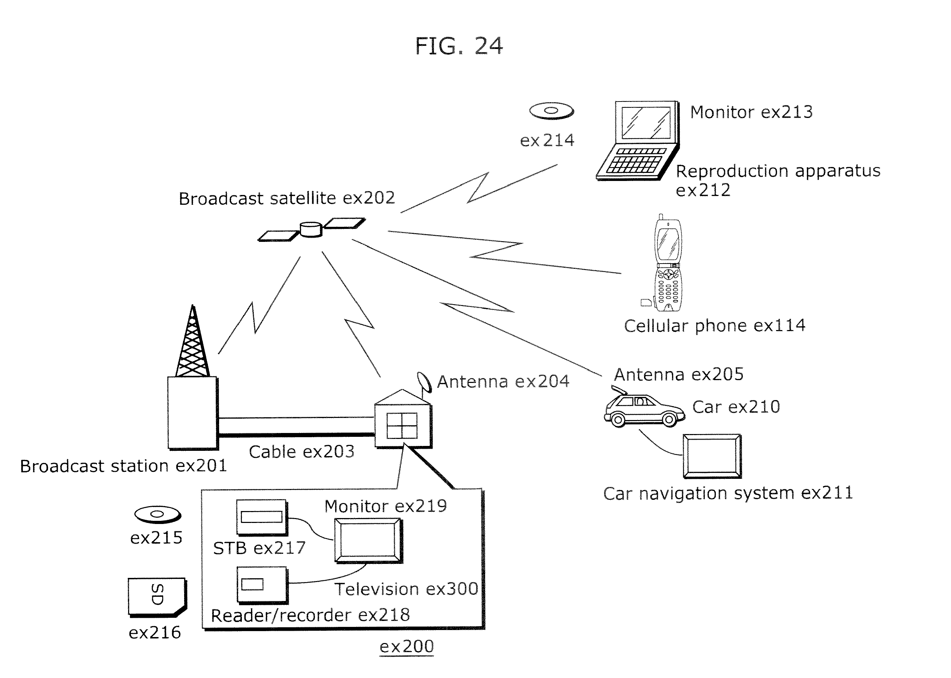

Aside from the example of the content providing system ex100, at least one of the moving picture coding apparatus (image coding apparatus) and the moving picture decoding apparatus (image decoding apparatus) described in each of Embodiments may be implemented in a digital broadcasting system ex200 illustrated in FIG. 24. More specifically, a broadcast station ex201 communicates or transmits, via radio waves to a broadcast satellite ex202, multiplexed data obtained by multiplexing audio data and others onto video data. The video data is data coded by the moving picture coding method described in each of Embodiments (i.e., data coded by the image coding apparatus in the present invention). Upon receipt of the multiplexed data, the broadcast satellite ex202 transmits radio waves for broadcasting. Then, a home-use antenna ex204 with a satellite broadcast reception function receives the radio waves. Next, a device such as a television (receiver) ex300 and a set top box (STB) ex217 decodes the received multiplexed data, and reproduces the decoded data (i.e., functions as the image coding apparatus in the present invention).

Furthermore, a reader/recorder ex218 (i) reads and decodes the multiplexed data recorded on a recording media ex215, such us a DVD and a BD, or (i) codes video signals in the recording medium ex215, and in same cases, writes data obtained by multiplexing an audio signal on the coded data. The reader/recorder ex218 can include the moving picture decoding apparatus or the moving picture coding apparatus as shown in each of Embodiments. In this case, the reproduced video signals are displayed on the monitor ex219, and can be reproduced by another device or system using the recording medium ex215 on which the multiplexed data is recorded. It is also possible to implement the moving picture decoding apparatus in the set top box ex217 connected to the cable ex203 for a cable television or to the antenna ex204 for satellite and/or terrestrial broadcasting, so as to display the video signals on the monitor ex219 of the television ex300. The moving picture decoding apparatus may be implemented not in the set top box but in the television ex300.

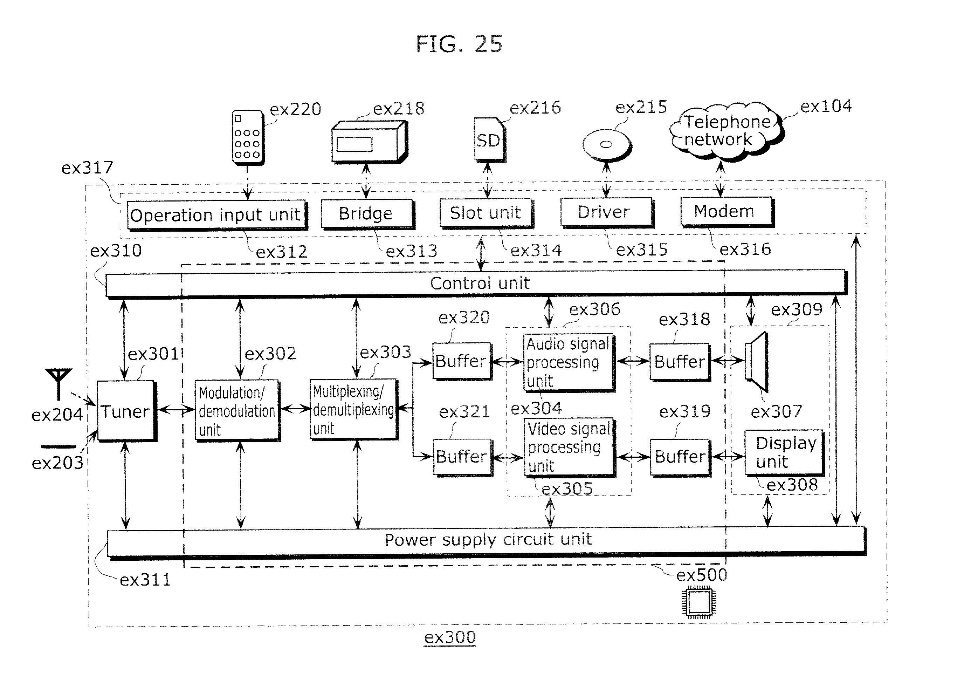

FIG. 25 illustrates the television (receiver) ex300 that uses the moving picture coding method and the moving picture decoding method described in each of Embodiments. The television ex300 includes: a tuner ex301 that obtains or provides multiplexed data obtained by multiplexing audio data onto video data, through the antenna ex204 or the cable ex203, etc. that receives a broadcast; a modulation/demodulation unit ex302 that demodulates the received multiplexed data or modulates data into multiplexed data to be supplied outside; and a multiplexing/demultiplexing unit ex303 that demultiplexes the modulated multiplexed data into video data and audio data, or multiplexes video data and audio data coded by a signal processing unit ex306 into data.

The television ex300 further includes: a signal processing unit ex306 including an audio signal processing unit ex304 and a video signal processing unit ex305 that decode audio data and video data and code audio data and video data, respectively (which function as the image coding apparatus and the image decoding apparatus); and an output unit ex309 including a speaker ex307 that provides the decoded audio signal, and a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to each other through a synchronous bus.

First, the configuration in which the television ex300 decodes multiplexed data obtained from outside through the antenna ex204 and others and reproduces the decoded data will be described. In the television ex300, upon a user operation through a remote controller ex220 and others, the multiplexing/demultiplexing unit ex303 demultiplexes the multiplexed data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in each of Embodiments, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read multiplexed data not through a broadcast and others but from the recording media ex215 and ex216, such as a magnetic disk, an optical disk, and a SD card. Next, a configuration in which the television ex300 codes an audio signal and a video signal, and transmits the data outside or writes the data on a recording medium will be described. In the television ex300, upon a user operation through the remote controller ex220 and others, the audio signal processing unit ex304 codes an audio signal, and the video signal processing unit ex305 codes a video signal, under control of the control unit ex310 using the coding method described in each of Embodiments. The multiplexing/demultiplexing unit ex303 multiplexes the coded video signal and audio signal, and provides the resulting signal outside. When the multiplexing/demultiplexing unit ex303 multiplexes the video signal and the audio signal, the signals may be temporarily stored in the buffers ex320 and ex321, and others so that the signals are reproduced in synchronization with each other. Here, the buffers ex318, ex319, ex320, and ex321 may be plural as illustrated, or at least one buffer may be shared in the television ex300. Furthermore, data may be stored in a buffer so that the system overflow and underflow may be avoided between the modulation/demodulation unit ex302 and the multiplexing/demultiplexing unit ex303, for example.

Furthermore, the television ex300 may include a configuration for receiving an AV input from a microphone or a camera other than the configuration for obtaining audio and video data from a broadcast or a recording medium, and may code the obtained data. Although the television ex300 can code, multiplex, and provide outside data in the description, it may be capable of only receiving, decoding, and providing outside data but not the coding, multiplexing, and providing outside data.

Furthermore, when the reader/recorder ex218 reads or writes multiplexed data from or on a recording medium, one of the television ex300 and the reader/recorder ex218 may decode or code the multiplexed data, and the television ex300 and the reader/recorder ex218 may share the decoding or coding.

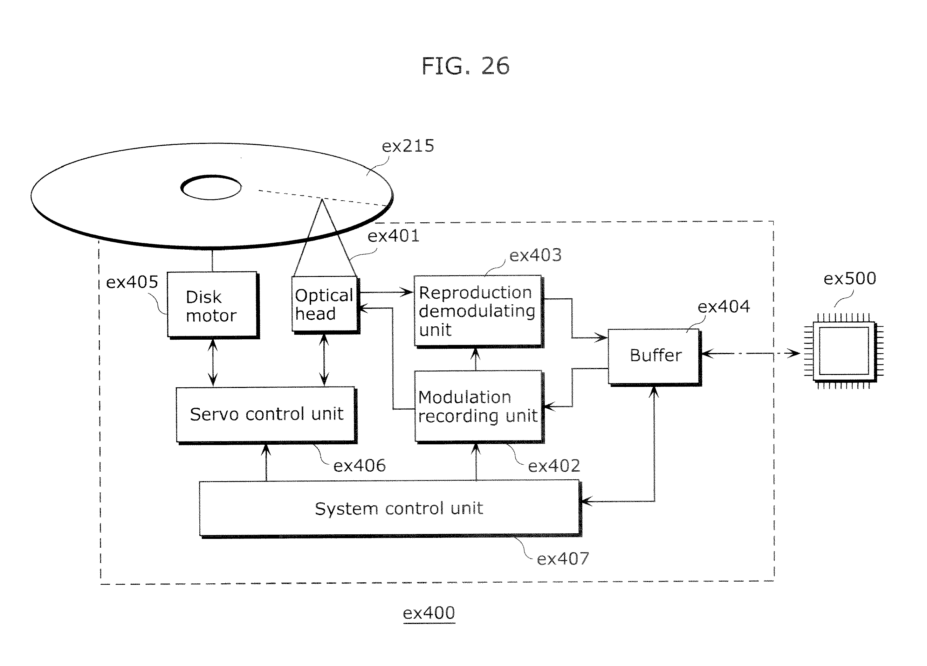

As an example, FIG. 26 illustrates a configuration of an information reproducing/recording unit ex400 when data is read or written from or on an optical disk. The information reproducing/recording unit ex400 includes constituent elements ex401, ex402, ex403, ex404, ex405, ex406, and ex407 to be described hereinafter. The optical head ex401 irradiates a laser spot in a recording surface of the recording medium ex215 that is an optical disk to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. The disk motor ex405 rotates the recording medium ex215. The servo control unit ex406 moves the optical head ex401 to a predetermined information track while controlling the rotation drive of the disk motor ex405 so as to follow the laser spot. The system control unit ex407 controls overall the information reproducing/recording unit ex400. The reading and writing processes can be implemented by the system control unit ex407 using various information stored in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write.

Although the optical head ex401 irradiates a laser spot in the description, it may perform high-density recording using near field light.

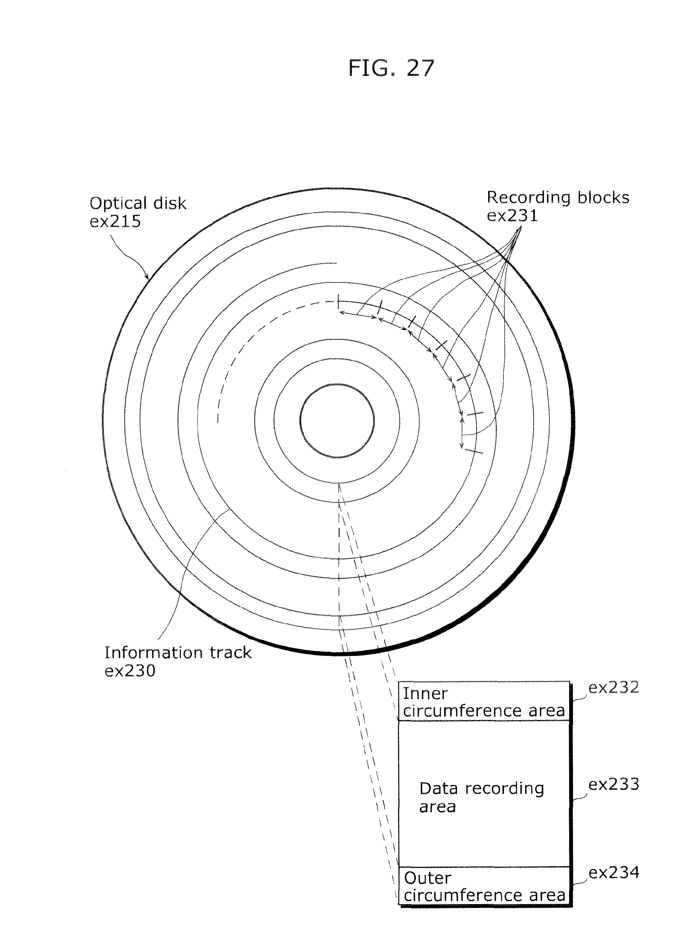

FIG. 27 illustrates the recording medium ex215 that is the optical disk. On the recording surface of the recording medium ex215, guide grooves are spirally formed, and an information track ex230 records, in advance, address information indicating an absolute position on the disk according to change in a shape of the guide grooves. The address information includes information for determining positions of recording blocks ex231 that are a unit for recording data. Reproducing the information track ex230 and reading the address information in an apparatus that records and reproduces data can lead to determination of the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit 400 reads and writes coded audio, coded video data, or multiplexed data obtained by multiplexing the coded audio and video data, from and on the data recording area ex233 of the recording medium ex215.

Although an optical disk having a layer, such as a DVD and a BD is described as an example in the description, the optical disk is not limited to such, and may be an optical disk having a multilayer structure and capable of being recorded on a part other than the surface. Furthermore, the optical disk may have a structure for multidimensional recording/reproduction, such as recording of information using light of colors with different wavelengths in the same portion of the optical disk and for recording information having different layers from various angles.

Furthermore, a car ex210 having an antenna ex205 can receive data from the satellite ex202 and others, and reproduce video on a display device such as a car navigation system ex211 set in the car ex210, in the digital broadcasting system ex200. Here, a configuration of the car navigation system ex211 will be a configuration, for example, including a GPS receiving unit from the configuration illustrated in FIG. 25. The same will be true for the configuration of the computer ex111, the cellular phone ex114, and others.

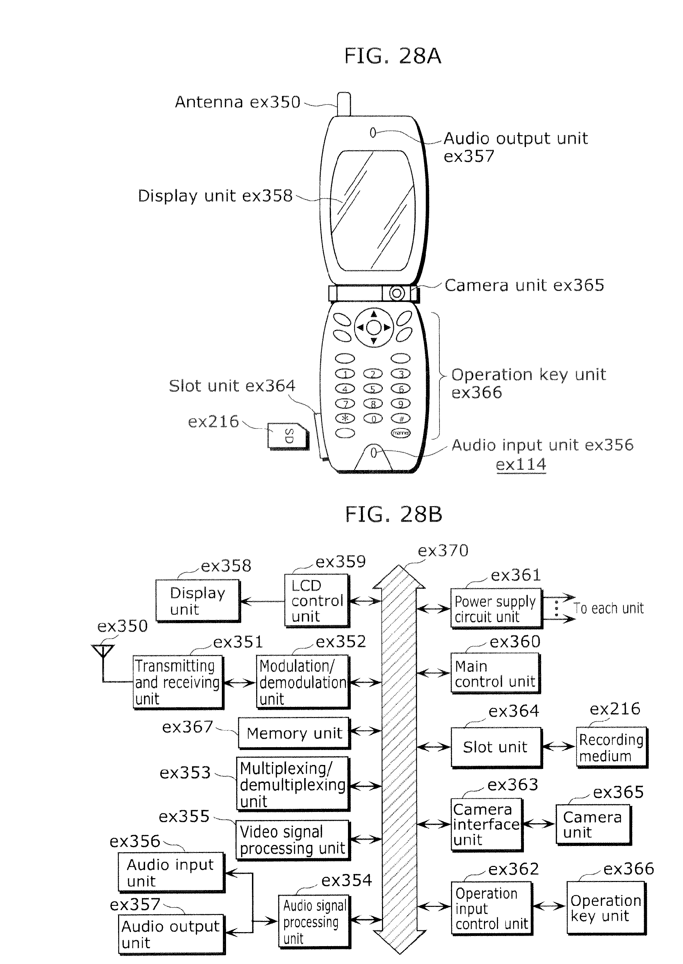

FIG. 28A illustrates the cellular phone ex114 that uses the moving picture coding method and the moving picture decoding method described in Embodiments. The cellular phone ex114 includes: an antenna ex350 for transmitting and receiving radio waves through the base station ex110; a camera unit ex365 capable of capturing moving and still images; and a display unit ex358 such as a liquid crystal display for displaying the data such as decoded video captured by the camera unit ex365 or received by the antenna ex350. The cellular phone ex114 further includes: a main body unit including an operation key unit ex366; an audio output unit ex357 such as a speaker for output of audio; an audio input unit ex356 such as a microphone for input of audio; a memory unit ex367 for storing captured video or still pictures, recorded audio, coded or decoded data of the received video, the still pictures, e-mails, or others; and a slot unit ex364 that is an interface unit for a recording medium that stores data in the same manner as the memory unit ex367.

Next, an example of a configuration of the cellular phone ex114 will be described with reference to FIG. 28B. In the cellular phone ex114, a main control unit ex360 designed to control overall each unit of the main body including the display unit ex358 as well as the operation key unit ex366 is connected mutually, via a synchronous bus ex370, to a power supply circuit unit ex361, an operation input control unit ex362, a video signal processing unit ex355, a camera interface unit ex363, a liquid crystal display (LCD) control unit ex359, a modulation/demodulation unit ex352, a multiplexing/demultiplexing unit ex353, an audio signal processing unit ex354, the slot unit ex364, and the memory unit ex367.

When a call-end key or a power key is turned ON by a user's operation, the power supply circuit unit ex361 supplies the respective units with power from a battery pack so as to activate the cell phone ex114.

In the cellular phone ex114, the audio signal processing unit ex354 converts the audio signals collected by the audio input unit ex356 in voice conversation mode into digital audio signals under the control of the main control unit ex360 including a CPU, ROM, and RAM. Then, the modulation/demodulation unit ex352 performs spread spectrum processing on the digital audio signals, and the transmitting and receiving unit ex351 performs digital-to-analog conversion and frequency conversion on the data, so as to transmit the resulting data via the antenna ex350. Also, in the cellular phone ex114, the transmitting and receiving unit ex351 amplifies the data received by the antenna ex350 in voice conversation mode and performs frequency conversion and the analog-to-digital conversion on the data. Then, the modulation/demodulation unit ex352 performs inverse spread spectrum processing on the data, and the audio signal processing unit ex354 converts it into analog audio signals, so as to output them via the audio output unit ex357.

Furthermore, when an e-mail in data communication mode is transmitted, text data of the e-mail inputted by operating the operation key unit ex366 and others of the main body is sent out to the main control unit ex360 via the operation input control unit ex362. The main control unit ex360 causes the modulation/demodulation unit ex352 to perform spread spectrum processing on the text data, and the transmitting and receiving unit ex351 performs the digital-to-analog conversion and the frequency conversion on the resulting data to transmit the data to the base station ex110 via the antenna ex350. When an e-mail is received, processing that is approximately inverse to the processing for transmitting an e-mail is performed on the received data, and the resulting data is provided to the display unit ex358.

When video, still images, or video and audio in data communication mode is or are transmitted, the video signal processing unit ex355 compresses and codes video signals supplied from the camera unit ex365 using the moving picture coding method shown in each of Embodiments (i.e., functions as the image coding apparatus in the present invention), and transmits the coded video data to the multiplexing/demultiplexing unit ex353. In contrast, during when the camera unit ex365 captures video, still images, and others, the audio signal processing unit ex354 codes audio signals collected by the audio input unit ex356, and transmits the coded audio data to the multiplexing/demultiplexing unit ex353.

The multiplexing/demultiplexing unit ex353 multiplexes the coded video data supplied from the video signal processing unit ex355 and the coded audio data supplied from the audio signal processing unit ex354, using a predetermined method. Then, the modulation/demodulation unit (modulation/demodulation circuit unit) ex352 performs spread spectrum processing on the multiplexed data, and the transmitting and receiving unit ex351 performs digital-to-analog conversion and frequency conversion on the data so as to transmit the resulting data via the antenna ex350.

When receiving data of a video file which is linked to a Web page and others in data communication mode or when receiving an e-mail with video and/or audio attached, in order to decode the multiplexed data received via the antenna ex350, the multiplexing/demultiplexing unit ex353 demultiplexes the multiplexed data into a video data bit stream and an audio data bit stream, and supplies the video signal processing unit ex355 with the coded video data and the audio signal processing unit ex354 with the coded audio data, through the synchronous bus ex370. The video signal processing unit ex355 decodes the video signal using a moving picture decoding method corresponding to the moving picture coding method shown in each of Embodiments (i.e., functions as the image decoding apparatus in the present invention), and then the display unit ex358 displays, for instance, the video and still images included in the video file linked to the Web page via the LCD control unit ex359. Furthermore, the audio signal processing unit ex354 decodes the audio signal, and the audio output unit ex357 provides the audio.

Furthermore, similarly to the television ex300, a terminal such as the cellular phone ex114 probably have 3 types of implementation configurations including not only (i) a transmitting and receiving terminal including both a coding apparatus and a decoding apparatus, but also (ii) a transmitting terminal including only a coding apparatus and (iii) a receiving terminal including only a decoding apparatus. Although the digital broadcasting system ex200 receives and transmits the multiplexed data obtained by multiplexing audio data onto video data in the description, the multiplexed data may be data obtained by multiplexing not audio data but character data related to video onto video data, and may be not multiplexed data but video data itself.

As such, the moving picture coding method and the moving picture decoding method in each of Embodiments can be used in any of the devices and systems described. Thus, the advantages described in each of Embodiments can be obtained.

Furthermore, the present invention is not limited to Embodiments, and various modifications and revisions are possible without departing from the scope of the present invention.

[Embodiment 4]

Video data can be generated by switching, as necessary, between (i) the moving picture coding method or the moving picture coding apparatus shown in each of Embodiments and (ii) a moving picture coding method or a moving picture coding apparatus in conformity with a different standard, such as MPEG-2, MPEG4-AVC, and VC-1.

Here, when a plurality of video data that conforms to the different standards is generated and is then decoded, the decoding methods need to be selected to conform to the different standards. However, since to which standard each of the plurality of the video data to be decoded conform cannot be detected, there is a problem that an appropriate decoding method cannot be selected.

In order to solve the problem, multiplexed data obtained by multiplexing audio data and others onto video data has a structure  including identification information indicating to which standard the video data conforms. The specific structure of the multiplexed data including the video data generated in the moving picture coding method and by the moving picture coding apparatus shown in each of Embodiments will be hereinafter described. The multiplexed data is a digital stream in the MPEG2-Transport Stream format.

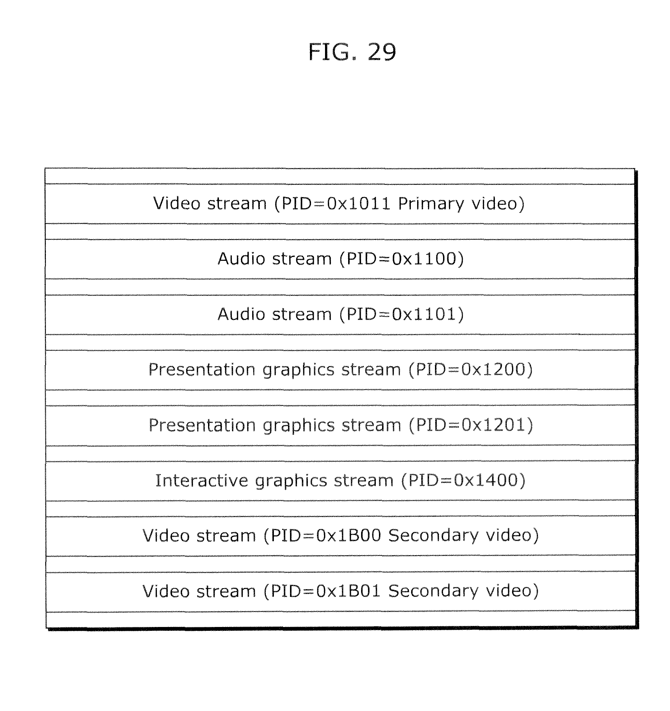

FIG. 29 illustrates a structure of the multiplexed data. As illustrated in FIG. 29, the multiplexed data can be obtained by multiplexing at least one of a video stream, an audio stream, a presentation graphics stream (PG), and an interactive graphics stream. The video stream represents primary video and secondary video of a movie, the audio stream (IG) represents a primary audio part and a secondary audio part to be mixed with the primary audio part, and the presentation graphics stream represents subtitles of the movie. Here, the primary video is normal video to be displayed on a screen, and the secondary video is video to be displayed on a smaller window in the primary video. Furthermore, the interactive graphics stream represents an interactive screen to be generated by arranging the GUI components on a screen. The video stream is coded in the moving picture coding method or by the moving picture coding apparatus shown in each of Embodiments, or in a moving picture coding method or by a moving picture coding apparatus in conformity with a conventional standard, such as MPEG-2, MPEG4-AVC, and VC-1. The audio stream is coded in accordance with a standard, such as Dolby-AC-3, Dolby Digital Plus, MLP, DTS, DTS-HD, and linear PCM.

Each stream included in the multiplexed data is identified by PID. For example, 0x1011 is allocated to the video stream to be used for video of a movie, 0x1100 to 0x111F are allocated to the audio streams, 0x1200 to 0x121F are allocated to the presentation graphics streams, 0x1400 to 0x141F are allocated to the interactive graphics streams, 0x1B00 to 0x1B1F are allocated to the video streams to be used for secondary video of the movie, and 0x1A00 to 0x1A1F are allocated to the audio streams to be used for the secondary video to be mixed with the primary audio.

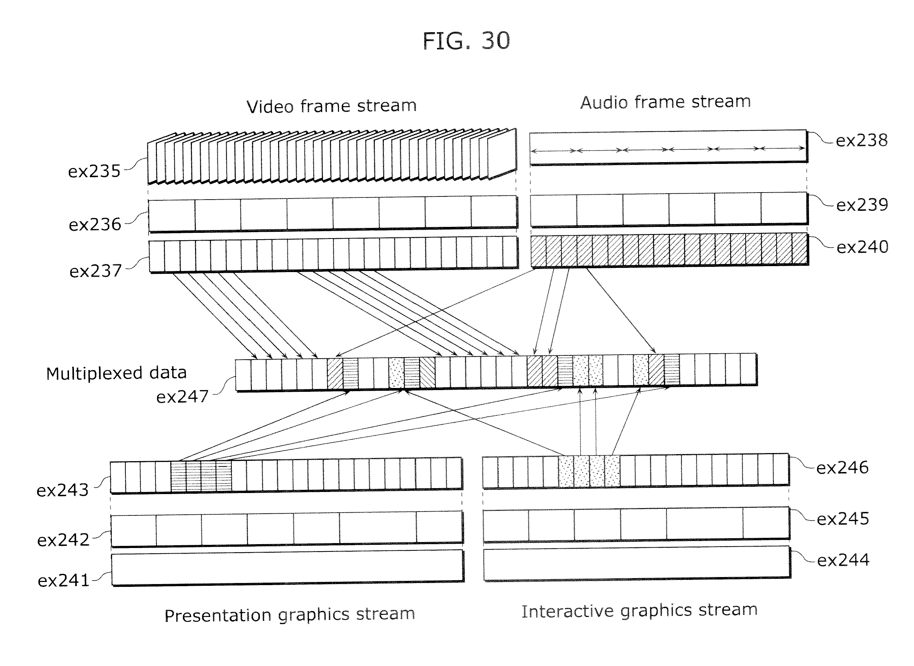

FIG. 30 schematically illustrates how data is multiplexed. First, a video stream ex235 composed of video frames and an audio stream ex238 composed of audio frames are transformed into a stream of PES packets ex236 and a stream of PES packets ex239, and further into TS packets ex237 and TS packets ex240, respectively. Similarly, data of a presentation graphics stream ex241 and data of an interactive graphics stream ex244 are transformed into a stream of PES packets ex242 and a stream of PES packets ex245, and further into TS packets ex243 and TS packets ex246, respectively. These TS packets are multiplexed into a stream to obtain multiplexed data ex247.

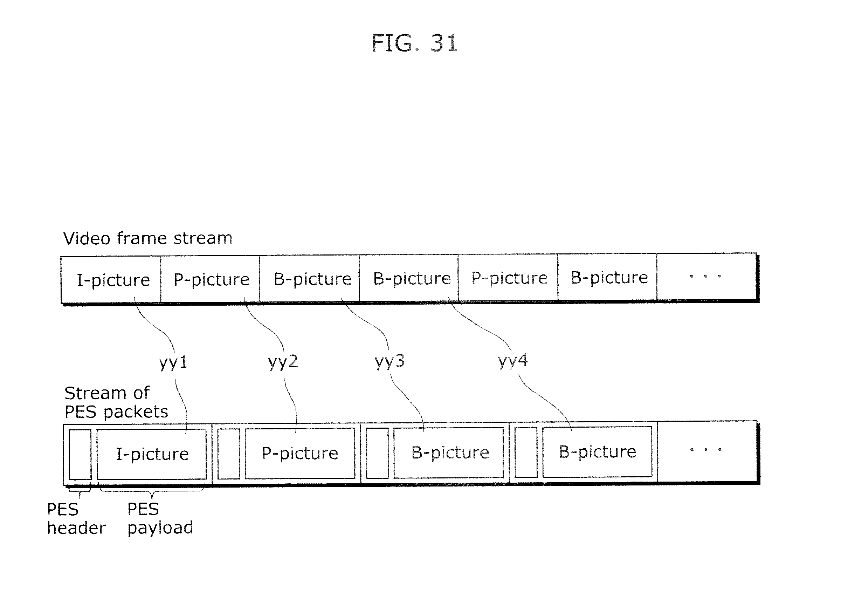

FIG. 31 illustrates how a video stream is stored in a stream of PES packets in more detail. The first bar in FIG. 31 shows a video frame stream in a video stream. The second bar shows the stream of PES packets. As indicated by arrows denoted as yy1, yy2, yy3, and yy4 in FIG, 31, the video stream is divided into pictures as I pictures, B pictures, and P pictures each of which is a video presentation unit, and the pictures are stored in a payload of each of the PES packets. Each of the PES packets has a PES header, and the PES header stores a Presentation Time-Stamp (PTS) indicating a display time of the picture, and a Decoding Time-Stamp (DTS) indicating a decoding time of the picture.

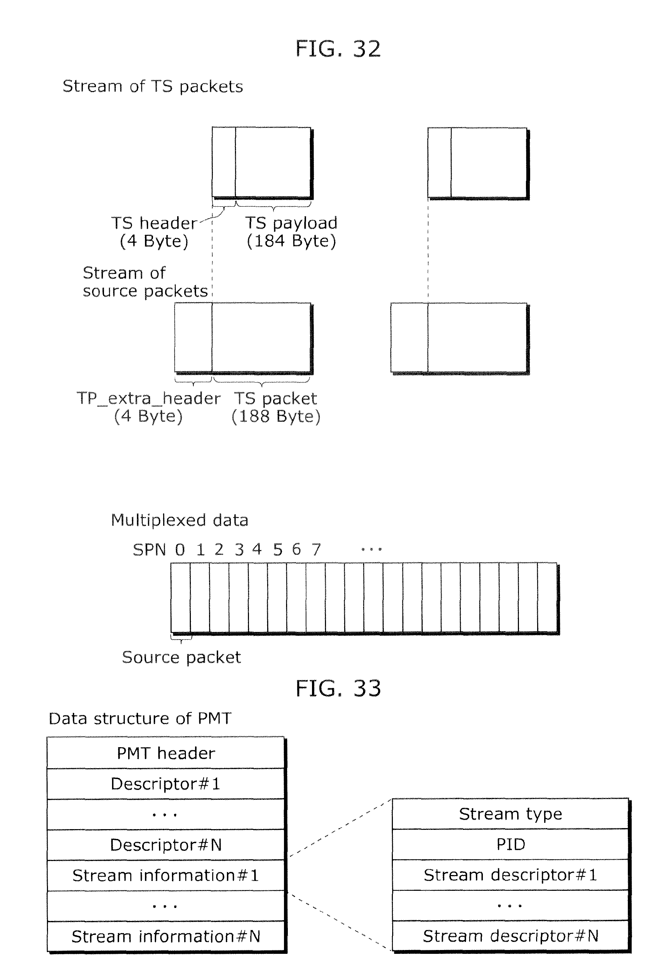

FIG. 32 illustrates a format of TS packets to be finally written on the multiplexed data. Each of the TS packets is a 188-byte fixed length packet including a 4-byte TS header having information, such as a PID for identifying a stream and a 184-byte TS payload for storing data. The PES packets are divided, and stored in the TS payloads, respectively. When a BD ROM is used, each of the TS packets is given a 4-byte TP_Extra_Header, thus resulting in 192-byte source packets. The source packets are written on the multiplexed data. The TP_Extra_Header stores information such as an Arrival_Time_Stamp (ATS). The ATS shows a transfer start time at which each of the TS packets is to be transferred to a PID filter. The source packets are arranged in the multiplexed data as shown at the bottom of FIG. 32. The numbers incrementing from the head of the multiplexed data are called source packet numbers (SPNs).

Each of the TS packets included in the multiplexed data includes not only streams of audio, video, subtitles and others, but also a Program Association Table (PAT), a Program Map Table (PMT), and a Program Clock Reference (PCR). The PAT shows what a PID in a PMT used in the multiplexed data indicates, and a PID of the PAT itself is registered as zero. The PMT stores PIDs of the streams of video, audio, subtitles and others included in the multiplexed data, and attribute information of the streams corresponding to the PIDs. The PMT also has various descriptors relating to the multiplexed data. The descriptors have information such as copy control information showing whether copying of the multiplexed data is permitted or not. The PCR stores STC time information corresponding to an ATS showing when the PCR packet is transferred to a decoder, in order to achieve synchronization between an Arrival Time Clock (ATC) that is a time axis of ATSs, and an System Time Clock (STC) that is a time axis of PTSs and DTSs.

FIG. 33 illustrates the data structure of the PMT in detail. A PMT header is disposed at the top of the PMT. The PMT header describes the length of data included in the PMT and others. A plurality of descriptors relating to the multiplexed data is disposed after the PMT header. Information such as the copy control information is described in the descriptors. After the descriptors, a plurality of pieces of stream information relating to the streams included in the multiplexed data is disposed. Each piece of stream information includes stream descriptors each describing information, such as a stream type for identifying a compression codec of a stream, a stream PID, and stream attribute information (such as a frame rate or an aspect ratio). The stream descriptors are equal in number to the number of streams in the multiplexed data.

When the multiplexed data is recorded on a recording medium and others, it is recorded together with multiplexed data information files.

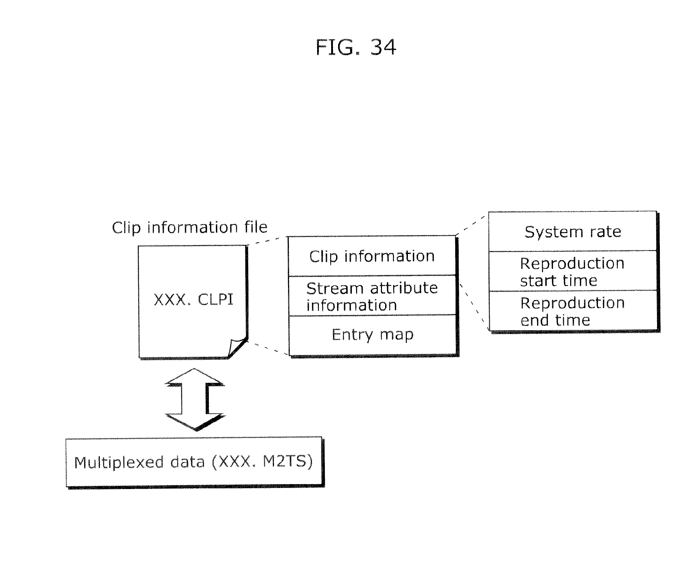

Each of the multiplexed data information files is management information of the multiplexed data as shown in FIG. 34. The multiplexed data information files are in one to one correspondence with the multiplexed data, and each of the files includes multiplexed data information, stream attribute information, and an entry map.

As illustrated in FIG. 34, the multiplexed data includes a system rate, a reproduction start time, and a reproduction end time. The system rate indicates the maximum transfer rate at which a system target decoder to be described later transfers the multiplexed data to a PID filter. The intervals of the ATSs included in the multiplexed data are set to not higher than a system rate. The reproduction start time indicates a PTS in a video frame at the head of the multiplexed data. An interval of one frame is added to a PTS in a video frame at the end of the multiplexed data, and the PTS is set to the reproduction end time.

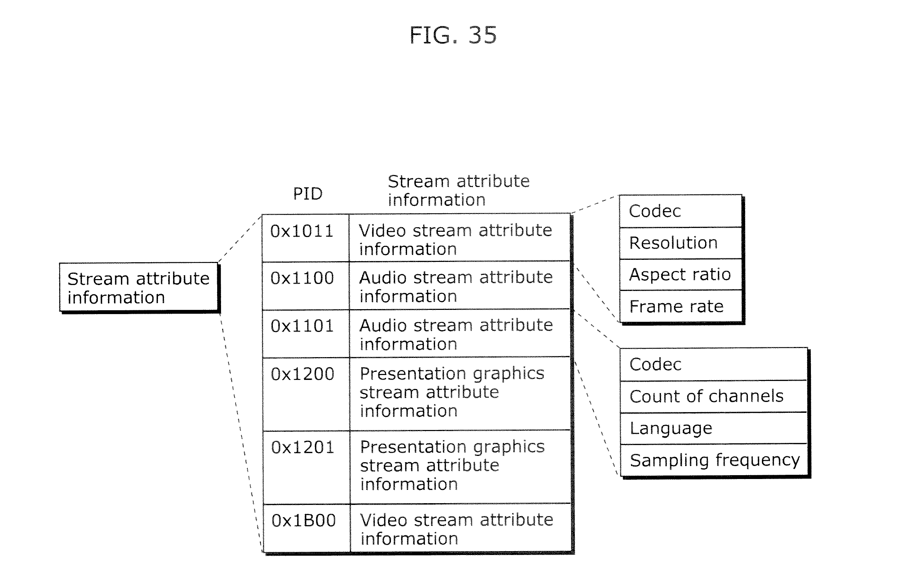

As shown in FIG. 35, a piece of attribute information is registered in the stream attribute information, for each PID of each stream included in the multiplexed data. Each piece of attribute information has different information depending on whether the corresponding stream is a video stream, an audio stream, a presentation graphics stream, or an interactive graphics stream. Each piece of video stream attribute information carries information including what kind of compression codec is used for compressing the video stream, and the resolution, aspect ratio and frame rate of the pieces of picture data that is included in the video stream. Each piece of audio stream attribute information carries information including what kind of compression codec is used for compressing the audio stream, how many channels are included in the audio stream, which language the audio stream supports, and how high the sampling frequency is. The video stream attribute information and the audio stream attribute information are used for initialization of a decoder before the player plays back the information.

In the present embodiment, the multiplexed data to be used is of a stream type included in the PMT. Furthermore, when the multiplexed data is recorded on a recording medium, the video stream attribute information included in the multiplexed data information is used. More specifically, the moving picture coding method or the moving picture coding apparatus described in each of Embodiments includes a step or a unit for allocating unique information indicating video data generated by the moving picture coding method or the moving picture coding apparatus in each of Embodiments, to the stream type included in the PMT or the video stream attribute information. With the configuration, the video data generated by the moving picture coding method or the moving picture coding apparatus described in each of Embodiments can be distinguished from video data that conforms to another standard.

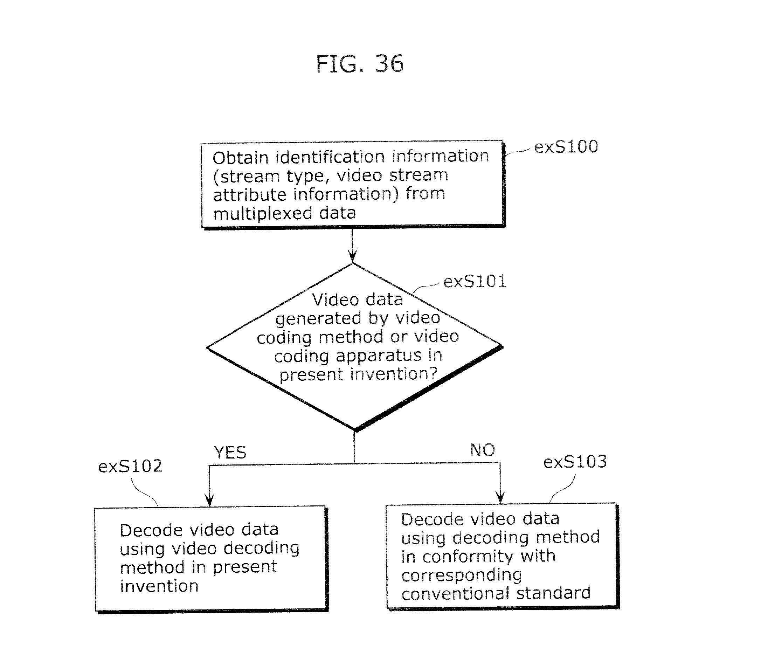

Furthermore, FIG. 36 illustrates steps of the moving picture decoding method according to the present embodiment. In Step exS100, the stream type included in the PMT or the video stream attribute information is obtained from the multiplexed data. Next, in Step exS101, it is determined whether or not the stream type or the video stream attribute information indicates that the multiplexed data is generated by the moving picture coding method or the moving picture coding apparatus in each of Embodiments. When it is determined that the stream type or the video stream attribute information indicates that the multiplexed data is generated by the moving picture coding method or the moving picture coding apparatus in each of Embodiments, in Step exS102, decoding is performed by the moving picture decoding method in each of Embodiments. Furthermore, when the stream type or the video stream attribute information indicates conformance to the conventional standards, such as MPEG-2, MPEG4-AVC, and VC-1, in Step exS103, decoding is performed by a moving picture decoding method in conformity with the conventional standards.

As such, allocating a new unique value to the stream type or the video stream attribute information enables determination whether or not the moving picture decoding method or the moving picture decoding apparatus that is described in each of Embodiments can perform decoding. Even when multiplexed data that conforms to a different standard, an appropriate decoding method or apparatus can be selected. Thus, it becomes possible to decode information without any error. Furthermore, the moving picture coding method or apparatus, or the moving picture decoding method or apparatus in the present embodiment can be used in the devices and systems described above.

[Embodiment 5]

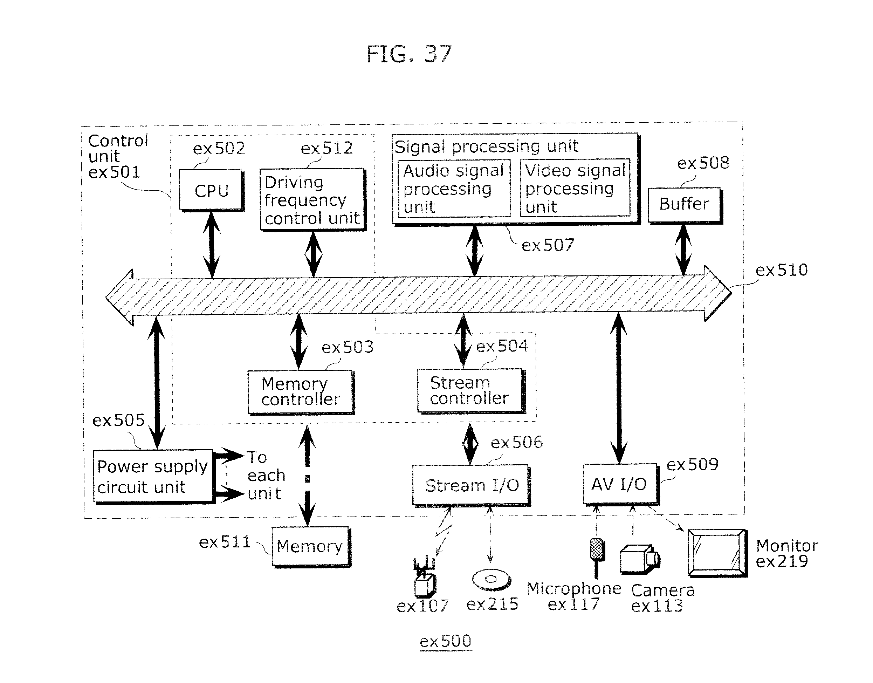

Each of the moving picture coding method, the moving picture coding apparatus, the moving picture decoding method, and the moving picture decoding apparatus in each of Embodiments is typically achieved in the form of an integrated circuit or a Large Scale Integrated (LSI) circuit. As an example of the LSI, FIG. 37 illustrates a configuration of the LSI ex500 that is made into one chip. The LSI ex500 includes elements ex501, ex502, ex503, ex504, ex505, ex506, ex507, ex508, and ex509 to be described below, and the elements are connected to each other through a bus ex510. The power supply circuit unit ex505 is activated by supplying each of the elements with power when the power supply circuit unit ex505 is turned on.

For example, when coding is performed, the LSI ex500 receives an AV signal from a microphone ex117, a camera ex113, and others through an AV IO ex509 under control of a control unit ex501 including a CPU ex502, a memory controller ex503, a stream controller ex504, and a driving frequency control unit ex512. The received AV signal is temporarily stored in an external memory ex511, such as an SDRAM. Under control of the control unit ex501, the stored data is segmented into data portions according to the processing amount and speed to be transmitted to a signal processing unit ex507. Then, the signal processing unit ex507 codes an audio signal and/or a video signal. Here, the coding of the video signal is the coding described in each of Embodiments. Furthermore, the signal processing unit ex507 sometimes multiplexes the coded audio data and the coded video data, and a stream IO ex506 provides the multiplexed data outside. The provided multiplexed data is transmitted to the base station ex107, or written on the recording media ex215. When data sets are multiplexed, the data should be temporarily stored in the buffer ex508 so that the data sets are synchronized with each other.

Although the memory ex511 is an element outside the LSI ex500, it may be included in the LSI ex500. The buffer ex508 is not limited to one buffer, but may be composed of buffers. Furthermore, the LSI ex500 may be made into one chip or a plurality of chips.

Furthermore, although the control unit ex501 includes the CPU ex502, the memory controller ex503, the stream controller ex504, the driving frequency control unit ex512, the configuration of the control unit ex501 is not limited to such. For example, the signal processing unit ex507 may further include a CPU. Inclusion of another CPU in the signal processing unit ex507 can improve the processing speed. Furthermore, as another example, the CPU ex502 may serve as or be a part of the signal processing unit ex507, and, for example, may include an audio signal processing unit. In such a case, the control unit ex501 includes the signal processing unit ex507 or the CPU ex502 including a part of the signal processing unit ex507.

The name used here is LSI, but it may also be called IC, system LSI, super LSI, or ultra LSI depending on the degree of integration.

Moreover, ways to achieve integration are not limited to the LSI, and a special circuit or a general purpose processor and so forth can also achieve the integration. Field Programmable Gate Array (FPGA) that can be programmed after manufacturing LSIs or a reconfigurable processor that allows re-configuration of the connection or configuration of an LSI can be used for the same purpose.

In the future, with advancement in semiconductor technology, a brand-new technology may replace LSI. The functional blocks can be integrated using such a technology. The possibility is that the present invention is applied to biotechnology.

[Embodiment 6]

When video data generated in the moving picture coding method or by the moving picture coding apparatus described in each of Embodiments is decoded, compared to when video data that conforms to a conventional standard, such as MPEG-2, MPEG4-AVC, and VC-1 is decoded, the processing amount probably increases. Thus, the LSI ex500 needs to be set to a driving frequency higher than that of the CPU ex502 to be used when video data in conformity with the conventional standard is decoded. However, when the driving frequency is set higher, there is a problem that the power consumption increases.

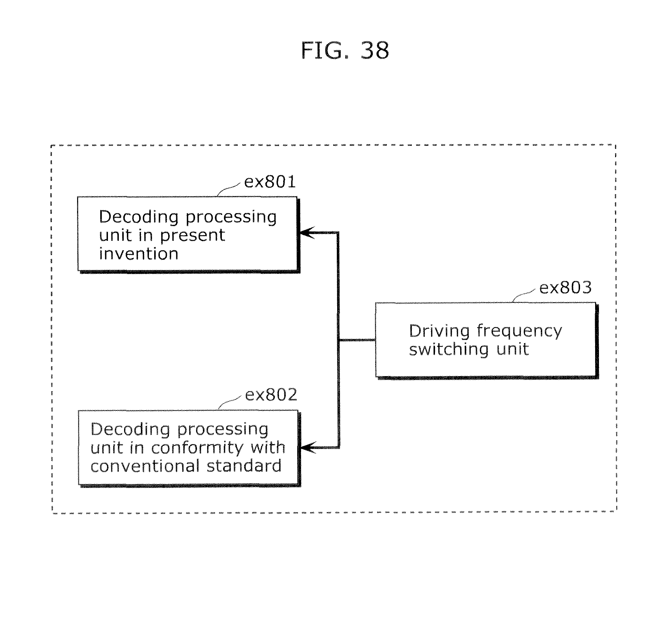

In order to solve the problem, the moving picture decoding apparatus, such as the television ex300 and the LSI ex500 is configured to determine to which standard the video data conforms, and switch between the driving frequencies according to the determined standard. FIG. 38 illustrates a configuration ex800 in the present embodiment. A driving frequency switching unit ex803 sets a driving frequency to a higher driving frequency when video data is generated by the moving picture coding method or the moving picture coding apparatus described in each of Embodiments. Then, the driving frequency switching unit ex803 instructs a decoding processing unit ex801 that executes the moving picture decoding method described in each of Embodiments to decode the video data. When the video data conforms to the conventional standard, the driving frequency switching unit ex803 sets a driving frequency to a lower driving frequency than that of the video data generated by the moving picture coding method or the moving picture coding apparatus described in each of Embodiments. Then, the driving frequency switching unit ex803 instructs the decoding processing unit ex802 that conforms to the conventional standard to decode the video data.

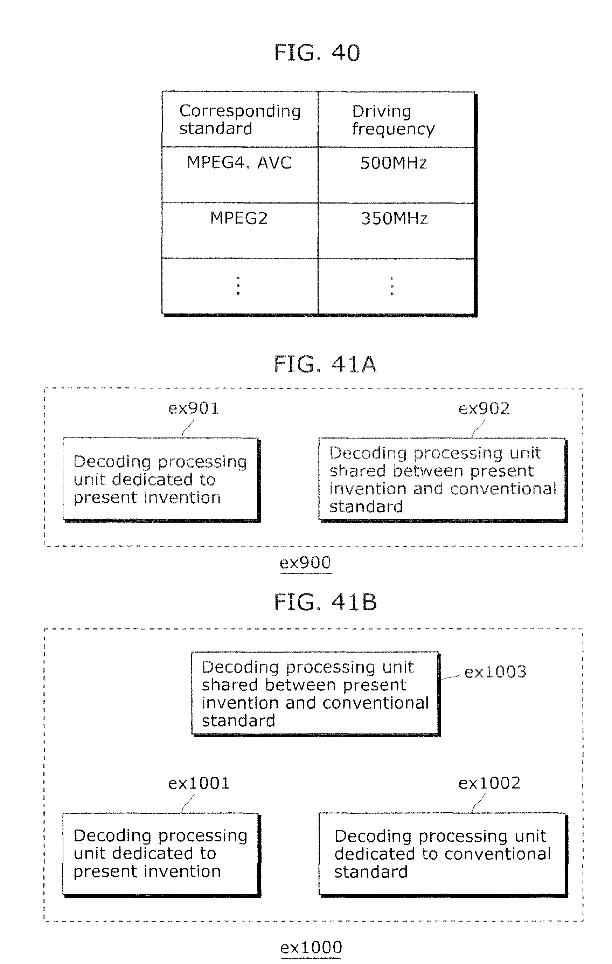

More specifically, the driving frequency switching unit ex803 includes the CPU ex502 and the driving frequency control unit ex512 in FIG. 37. Here, each of the decoding processing unit ex801 that executes the moving picture decoding method described in each of Embodiments and the decoding processing unit ex802 that conforms to the conventional standard corresponds to the signal processing unit ex507 in FIG. 124. The CPU ex502 determines to which standard the video data conforms. Then, the driving frequency control unit ex512 determines a driving frequency based on a signal from the CPU ex502. Furthermore, the signal processing unit ex507 decodes the video data based on the signal from the CPU ex502. For example, the identification information described in Embodiment 4 is probably used for identifying the video data. The identification information is not limited to the one described in Embodiment 4 but may be any information as long as the information indicates to which standard the video data conforms. For example, when which standard video data conforms to can be determined based on an external signal for determining that the video data is used for a television or a disk, etc., the determination may be made based on such an external signal. Furthermore, the CPU ex502 selects a driving frequency based on, for example, a look-up table in which the standards of the video data are associated with the driving frequencies as shown in FIG. 40. The driving frequency can be Selected by storing the look-up table in the buffer ex508 and in an internal memory of an LSI, and with reference to the look-up table by the CPU ex502.

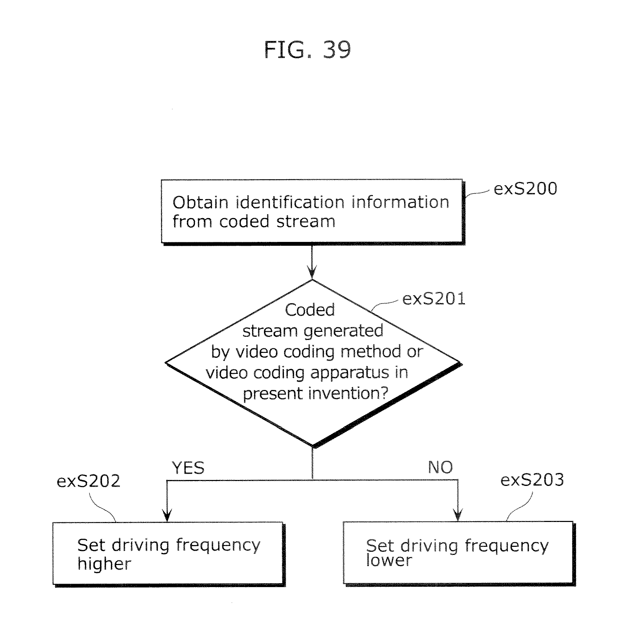

FIG. 39 illustrates steps for executing a method in the present embodiment. First, in Step exS200, the signal processing unit ex507 obtains identification information from the multiplexed data. Next, in Step exS201, the CPU ex502 determines whether or not the video data is generated by the coding method and the coding apparatus described in each of Embodiments, based on the identification information. When the video data is generated by the moving picture coding method and the moving picture coding apparatus described in each of Embodiments, in Step exS202, the CPU ex502 transmits a signal for setting the driving frequency to a higher driving frequency to the driving frequency control unit ex512. Then, the driving frequency control unit ex512 sets the driving frequency to the higher driving frequency. On the other hand, when the identification information indicates that the video data conforms to the conventional standard, such as MPEG-2, MPEG4-AVC, and VC-1, in Step exS203, the CPU ex502 transmits a signal for setting the driving frequency to a lower driving frequency to the driving frequency control unit ex512. Then, the driving frequency control unit ex512 sets the driving frequency to the lower driving frequency than that in the case where the video data is generated by the moving picture coding method and the moving picture coding apparatus described in each of Embodiment.

Furthermore, along with the switching of the driving frequencies, the power conservation effect can be improved by changing the voltage to be applied to the LSI ex500 or an apparatus including the LSI ex500. For example, when the driving frequency is set lower, the voltage to be applied to the LSI ex500 or the apparatus including the LSI ex500 is probably set to a voltage lower than that in the case where the driving frequency is set higher.

Furthermore, when the processing amount for decoding is larger, the driving frequency may be set higher, and when the processing amount for decoding is smaller, the driving frequency may be set lower as the method for setting the driving frequency. Thus, the setting method is not limited to the ones described above. For example, when the processing amount for decoding video data in conformity with MPEG4-AVC is larger than the processing amount for decoding video data generated by the moving picture coding method and the moving picture coding apparatus described in each of Embodiments, the driving frequency is probably set in reverse order to the setting described above.

Furthermore, the method for setting the driving frequency is not limited to the method for setting the driving frequency lower. For example, when the identification information indicates that the video data is generated by the moving picture coding method and the moving picture coding apparatus described in each of Embodiments, the voltage to be applied to the LSI ex500 or the apparatus including the LSI ex500 is probably set higher. When the identification information indicates that the video data conforms to the conventional standard, such as MPEG-2, MPEG4-AVC, and VC-1, the voltage to be applied to the LSI ex500 or the apparatus including the LSI ex500 is probably set lower. As another example, when the identification information indicates that the video data is generated by the moving picture coding method and the moving picture coding apparatus described in each of Embodiments, the driving of the CPU ex502 does not probably have to be suspended. When the identification information indicates that the video data conforms to the conventional standard, such as MPEG-2, MPEG4-AVC, and VC-1, the driving of the CPU ex502 is probably suspended at a given time because the CPU ex502 has extra processing capacity. Even when the identification information indicates that the video data is generated by the moving picture coding method and the moving picture coding apparatus described in each of Embodiments, in the case where the CPU ex502 has extra processing capacity, the driving of the CPU ex502 is probably suspended at a given time. In such a case, the suspending time is probably set shorter than that in the case where when the identification information indicates that the video data conforms to the conventional standard, such as MPEG-2, MPEG4-AVC, and VC-1.

Accordingly, the power conservation effect can be improved by switching between the driving frequencies in accordance with the standard to which the video data conforms. Furthermore, when the LSI ex500 or the apparatus including the LSI ex500 is driven using a battery, the battery life can be extended with the power conservation effect.

[Embodiment 7]

There are cases where a plurality of video data that conforms to different standards, is provided to the devices and systems, such as a television and a mobile phone. In order to enable decoding the plurality of video data that conforms to the different standards, the signal processing unit ex507 of the LSI ex500 needs to conform to the different standards. However, the problems of increase in the scale of the circuit of the LSI ex500 and increase in the cost arise with the individual use of the signal processing units ex507 that conform to the respective standards.

In order to solve the problem, what is conceived is a configuration in which the decoding processing unit for implementing the moving picture decoding method described in each of Embodiments and the decoding processing unit that conforms to the conventional standard, such as MPEG-2, MPEG4-AVC, and VC-1 are partly shared. Ex900 in FIG. 41A shows an example of the configuration. For example, the moving picture decoding method described in each of Embodiments and the moving picture decoding method that conforms to MPEG4-AVC have, partly in common, the details of processing, such as entropy coding, inverse quantization, deblocking filtering, and motion compensated prediction. The details of processing to be shared probably include use of a decoding processing unit ex902 that conforms to MPEG4-AVC. In contrast, a dedicated decoding processing unit ex901 is probably used for other processing unique to the present invention. Since the present invention is characterized by intra prediction processing in particular, for example, the dedicated decoding processing unit ex901 is used for intra prediction processing. Otherwise, the decoding processing unit is probably shared for one of the entropy coding, inverse quantization, deblocking filtering, and motion compensation, or all of the processing. The decoding processing unit for implementing the moving picture decoding method described in each of Embodiments may be shared for the processing to be shared, and a dedicated decoding processing unit may be used for processing unique to that of MPEG4-AVC.

Furthermore, ex1000 in FIG. 41B shows another example in that processing is partly shared. This example uses a configuration including a dedicated decoding processing unit ex1001 that supports the processing unique to the present invention, a dedicated decoding processing unit ex1002 that supports the processing unique to another conventional standard, and a decoding processing unit ex1003 that supports processing to be shared between the moving picture decoding method in the present invention and the conventional moving picture decoding method. Here, the dedicated decoding processing units ex1001 and ex1002 are not necessarily specialized for the processing of the present invention and the processing of the conventional standard, respectively, and may be the ones capable of implementing general processing. Furthermore, the configuration of the present embodiment can be implemented by the LSI ex500.

As such, reducing the scale of the circuit of an LSI and reducing the cost are possible by sharing the decoding processing  unit for the processing to be shared between the moving picture decoding method in the present invention and the moving picture decoding method in conformity with the conventional standard.

[Industrial Applicability]

The present invention achieves effects of fully improving coding efficiency, and can be used for various purposes such as storage, transmission, and communication, for example. For example, the present invention can be used for high resolution information display devices and high resolution imaging devices such as televisions, digital video recorders, car navigations, cellular phones, digital cameras, and digital video cameras, and thus has high availability.

[Reference Signs List]

100, 500 Moving picture coding apparatus
101, 501 Dividing unit
102, 502, 804 Selecting unit
103, 202, 302, 402, 503, 602, 702, 802 Switch unit
104, 504 First coding unit
105, 505 Second coding unit
106, 506 Header coding unit
107, 208, 305, 507, 608, 705 Gate unit
108, 508 Bitstream generating unit
201, 601 First selecting unit
203, 404 Validity determining unit
204, 405 Reference sample calculating unit
205, 605 Second selecting unit
206, 406, 606, 805 Predicted sample calculating unit
207, 607 Difference data calculating unit
209, 609 Coding unit
210, 610 Reconstructing unit
211, 410, 611, 810 Memory unit
212 Non-intra predicting unit
220, 420 Intra predicting unit
300, 700 Moving picture decoding apparatus
301, 701 Analyzing unit
303, 703 First decoding unit
304, 704 Second decoding unit
306, 706 Image generating unit
401, 801 First analyzing unit
403, 803 Second analyzing unit
407, 807 Reconstructed sample calculating unit
408, 808 First gate unit
409, 809 Second gate unit
411 Non-intra reconstructing unit
612 Non-intra DC predicting unit
620, 820 Intra DC predicting unit
811 Non-intra DC reconstructing unit
900 Coded moving picture bitstream
901 Sequence header
902, 913 Data
911 Picture Header
912 Picture data
921 Slice header
922 Slice data
950, 960 Selection information
951, 961 Profile parameter
952, 962 Level parameter
D101, D501 Original picture
D102, D302, D402, D502, D702, D802 Selection information
D103, D104, D105, D503, D504, D505 Variable-length-coding block
D106, D107, D108, D109, D506, D507, D508, D509 Coded bitstream
D110, D210, D301, D401, D510, D610, D701, D801 Coded moving picture bitstream
D201, D203, D216, D601, D603, D616 Sample block
D202, D214, D416, D602, D614, D816 Prediction type
D204, D205, D207, D208, D209, D211, D212, D217, D405, D406, D407, D410, D413, D414, D606, D607, D608, D609, D611, D612, D617, D805, D807, D810, D813, D814 Data
D206 Intra prediction method
D213, D415, D613, D815 Valid sample value
D215, D417, D615, D817 Coding information
D303, D304, D403, D411, D703, D704, D803, D811 Bitstream D305, D306, D307, D408, D412, D705, D706, D707, D808, D812 Reconstructed sample value

D308, D708 Reconstructed picture
D404 Analysis data
D409, D809 Reconstructed sample
D804 Difference data

**Claims**

**1.** A moving picture decoding method comprising:

analyzing a coded moving picture bitstream to obtain difference data of a target block among a plurality of blocks of two or more sizes;
performing intra prediction on the target block to calculate values of predicted samples of the target block; and
calculating reconstructed samples of the target block by adding the difference data and the values of the predicted samples,
wherein in said performing of intra prediction,
validity of each of reference samples that are located one of immediately above and immediately to the left of the target block is determined, and when the reference samples include both a valid reference sample and an invalid reference sample, the intra prediction is performed using the valid reference sample, and
an intra-predicted reference sample is determined as a valid reference sample, and an inter-predicted reference sample is determined as an invalid reference sample.

**2.** The moving picture decoding method according to Claim 1,
wherein in said analyzing, the coded moving picture bitstream is further analyzed to determine an intra prediction method, and
said performing of intra prediction further includes:

calculating a complementary sample using one or more valid reference samples including the valid reference sample, the complementary sample being a reference sample at a location of the invalid reference sample; and
calculating the predicted samples of the target block in accordance with the intra prediction method, using the valid reference sample and the complementary sample.

**3.** The moving picture decoding method according to Claim 2,
wherein said calculating of a complementary sample includes:

selecting one of the valid reference samples as a selected sample; and
determining a value of the selected sample as a value of the complementary sample.

**4.** The moving picture decoding method according to Claim 3,
wherein said selecting includes:

identifying, as a start reference sample location, a location of a valid reference sample found first in a search in a direction starting from a location of a bottom-left reference sample and ending at a location of a top-right reference sample among locations of all the reference samples;
determining whether the invalid reference sample is located before or after the start reference sample location in a sample order that is the same as an order of samples in the search;
selecting a sample at the start reference sample location as the selected sample when the invalid reference sample is located before the start sample location; and
selecting, when the invalid reference sample is located after the start sample location, a valid reference sample as the selected sample in accordance with the sample order that is the same as the order of samples in the search, the valid reference sample being located before and closest to a location of the invalid reference sample.

**5.** The moving picture decoding method according to Claim 2,
wherein said calculating of a complementary sample includes:

selecting the valid reference samples as a plurality of selected samples;
calculating a plurality of scaling values by multiplying a value of each of the selected samples by a predetermined scaling factor;

calculating a first sum total value that is a sum total of the scaling values;
calculating a second sum total value that is a sum of the first sum total value and a predetermined offset value; and
calculating a value of the complementary sample by down-shifting the second sum total value by a predetermined shift step value.

6. The moving picture decoding method according to Claim 1,
wherein the intra prediction is intra DC prediction.

7. The moving picture decoding method according to Claim 6,
wherein said performing of intra prediction includes:

selecting each of one or more valid reference samples including the valid reference sample as a selected sample;
specifying the number of the selected samples;
selecting a scaling factor, an offset value, and a shift step value, using a look-up table, in accordance with the number of the selected samples;
calculating a first sum total value that is a sum total of values of the selected samples;
calculating a scaling value by multiplying the first sum total value by the selected scaling factor;
calculating a second sum total value that is a sum of the selected offset value and the scaling value; and
generating each value of all the predicted samples of the target block by down-shifting the second sum total value by the selected shift step value.

8. The moving picture decoding method according to Claim 6,
wherein said performing of intra prediction further includes performing of intra prediction in the case in which a predetermined value is determined as each value of all the predicted samples of the target block.

9. The moving picture decoding method according to any one of Claims 1 to 8,
wherein in said analyzing, selection information coded in a header of the coded moving picture bitstream is further obtained,
the selection information indicates one of (1) a constrained intra prediction scheme that is the intra prediction and (2) an unconstrained intra prediction scheme for performing intra prediction using all the reference samples without determining the validity of each of the reference samples, and
in said performing of intra prediction, the intra prediction is performed using one of the constrained intra prediction scheme and the unconstrained intra prediction scheme indicated by the selection information.

10. The moving picture decoding method according to any one of Claims 1 to 9,
wherein in said performing of intra prediction, a reference sample outside a target picture is determined as an invalid reference sample.

11. The moving picture decoding method according to any one of Claims 1 to 9,
wherein in said performing of intra prediction, a reference sample that is not included in the same unit of picture division as the target block is determined as an invalid reference sample.

12. The moving picture decoding method according to Claim 11,
wherein the unit of picture division is a slice.

13. The moving picture decoding method according to Claim 11,
wherein the unit of picture division is a lightweight slice.

14. The moving picture decoding method according to Claim 11,
wherein the unit of picture division is a tile.

15. The moving picture decoding method according to Claim 11,
wherein the unit of picture division is a wavefront parallel processing unit (WPP).

16. A moving picture coding method comprising:

dividing an original picture into a plurality of blocks of two or more sizes;
performing intra prediction on a target block among the blocks to calculate values of predicted samples;

calculating difference data that represents a difference between an original image in the target block and the values of the predicted samples, and

coding the difference data to generate a coded moving picture bitstream,

wherein in said performing of intra prediction,

validity of each of reference samples that are located one of immediately above and immediately to the left of the target block is determined, and when the reference samples include both a valid reference sample and an invalid reference sample, the intra prediction is performed using the valid reference sample, and

an intra-predicted reference sample is determined as a valid reference sample, and an inter-predicted reference sample is determined as an invalid reference sample.

**17.** A moving picture decoding apparatus comprising:

an analyzing unit configured to analyze a coded moving picture bitstream to obtain difference data of a target block among a plurality of blocks of two or more sizes;

an intra predicting unit configured to perform intra prediction on the target block to calculate values of predicted samples of the target block; and

a reconstructed sample calculating unit configured to calculate reconstructed samples of the target block by adding the difference data and the values of the predicted samples,

wherein said intra predicting unit is configured to

determine validity of each of reference samples that are located one of immediately above and immediately to the left of the target block, and perform, when the reference samples include both a valid reference sample and an invalid reference sample, the intra prediction using the valid reference sample, and

determine an intra-predicted reference sample as a valid reference sample, and determine an inter-predicted reference sample as an invalid reference sample.

**18.** A moving picture coding apparatus comprising:

a dividing unit configured to divide an original picture into a plurality of blocks of two or more sizes;

an intra predicting unit configured to perform intra prediction on a target block among the blocks to calculate values of predicted samples;

a difference data calculating unit configured to calculate difference data that represents a difference between an original image in the target block and the values of the predicted samples; and

a coding unit configured to code the difference data to generate a coded moving picture bitstream,

wherein said intra predicting unit is configured to

determine validity of each of reference samples that are located one of immediately above and immediately to the left of the target block, and perform, when the reference samples include both a valid reference sample and an invalid reference sample, the intra prediction using the valid reference sample, and

determine an intra-predicted reference sample as a valid reference sample, and determine an inter-predicted reference sample as an invalid reference sample.

**19.** A moving picture coding and decoding apparatus comprising:

the moving picture coding apparatus according to Claim 18; and

the moving picture decoding apparatus according to Claim 17.

FIG. 1

FIG. 2

## FIG. 3

```
        ┌─────────────┐
        │    Start    │
        └─────────────┘
               │
               ▼
┌──────────────────────────────────────────┐   S101
│ Select one of constrained intra prediction scheme │
│ and non-constrained intra prediction scheme │
└──────────────────────────────────────────┘
               │
               ▼
┌──────────────────────────────────────────┐   S102
│         Divide picture into blocks         │
└──────────────────────────────────────────┘
               │
               ▼
┌──────────────────────────────────────────┐   S103
│        Code blocks into bitstream using    │
│         selected intra prediction scheme   │
└──────────────────────────────────────────┘
               │
               ▼
┌──────────────────────────────────────────┐   S104
│        Code result of selection of intra   │
│   prediction scheme in header of bitstream │
└──────────────────────────────────────────┘
               │
               ▼
        ┌─────────────┐
        │     End     │
        └─────────────┘
```

## FIG. 4A

## FIG. 4B

## FIG. 4C

## FIG. 4D

FIG. 5

Start

Select prediction type for block — S201

Intra prediction? — S202

No

Yes — S203

Calculate predicted sample value using sample value at valid (intra-predicted) sample location

Calculate difference data — S204

Calculate difference data and prediction information by performing non-intra prediction processing — S206

Coding — S205

End

FIG. 6

```
                    ┌──────────────┐
                    │    Start     │
                    └──────┬───────┘
                           │         S201
                    ┌──────▼──────────────────┐
                    │ Select prediction type  │
                    │ for block               │
                    └──────┬──────────────────┘
                           │         S202
                      ╱────▼────╲          No
                    ╱  Intra      ╲──────────────────────┐
                    ╲ prediction? ╱                      │
                      ╲────┬────╱                        │
                           │ Yes                         │
                           │        S203A                │
                    ┌──────▼──────────────────┐          │
                    │ Determine validity of   │          │
                    │ each reference sample   │          │
                    │ location                │          │
                    └──────┬──────────────────┘          │
                           │        S203B                │
                    ┌──────▼──────────────────┐          │
                    │ Calculate sample value  │          │
                    │ at invalid location     │          │
                    │ using sample value at   │          │
                    │ valid location          │          │
                    └──────┬──────────────────┘          │
                           │        S203C                │
                    ┌──────▼──────────────────┐          │
                    │ Select intra prediction │          │
                    │ method                  │          │
                    └──────┬──────────────────┘          │
                           │        S203D                │
                    ┌──────▼──────────────────┐   ┌──────▼──────────────────┐  S206
                    │ Calculate predicted     │   │ Calculate difference    │
                    │ sample value            │   │ data and prediction     │
                    └──────┬──────────────────┘   │ information by          │
                           │        S204          │ performing non-intra    │
                    ┌──────▼──────────────────┐   │ prediction processing   │
                    │ Calculate difference    │   └──────┬──────────────────┘
                    │ data                    │          │
                    └──────┬──────────────────┘          │
                           │◄────────────────────────────┘
                           │        S205
                    ┌──────▼──────────────────┐
                    │        Coding           │
                    └──────┬──────────────────┘
                           │
                    ┌──────▼───────┐
                    │     End      │
                    └──────────────┘
```

FIG. 7

```
        ┌─────────────┐
        │    Start    │
        └─────────────┘
               │
               ▼
┌──────────────────────────────┐  ── S301
│ Obtain result of selection   │
│ between constrained intra    │
│ prediction scheme and        │
│ unconstrained intra prediction│
│ scheme by analyzing header   │
└──────────────────────────────┘
               │
               ▼
┌──────────────────────────────┐  ── S302
│ Decode using intra prediction │
│ scheme shown by selection result│
└──────────────────────────────┘
               │
               ▼
        ┌─────────────┐
        │     End     │
        └─────────────┘
```

FIG. 8

```
        ┌─────────────┐
        │    Start    │
        └─────────────┘
               │
               ▼                        S401
┌──────────────────────────────┐
│ Obtain prediction type for block│
└──────────────────────────────┘
               │
               ▼          S402
           ◇─────────────◇        No
          ◇  Intra prediction? ◇ ─────────┐
           ◇─────────────◇                │
               │ Yes                      │
               │      S403                │
               ▼                          │
┌──────────────────────────┐             │
│ Calculate predicted sample│             │
│ value using sample value at│            │
│ valid (intra-predicted)   │             │
│ sample location           │             │
└──────────────────────────┘             │
               │      S404      S405      ▼
               ▼          ┌──────────────────────────────┐
┌──────────────────────┐ │ Calculate reconstructed sample│
│ Calculate reconstructed│ │ value by performing non-intra │
│ sample value         │ │ prediction processing         │
└──────────────────────┘ └──────────────────────────────┘
               │                          │
               ▼◄─────────────────────────┘
        ┌─────────────┐
        │     End     │
        └─────────────┘
```

FIG. 9

```
                    ┌──────────┐
                    │  Start   │
                    └──────────┘
                         │
                         ▼          S401
        ┌────────────────────────────┐
        │ Obtain prediction type for block│
        └────────────────────────────┘
                         │
                         ▼          S402
                    ╱─────────╲         No
                   ╱ Intra     ╲────────────────────┐
                   ╲ prediction?╱                   │
                    ╲─────────╱                     │
                         │ Yes                       │
                         ▼    S403A                  │
        ┌────────────────────────────┐              │
        │ Obtain difference data and │              │
        │ intra prediction method    │              │
        └────────────────────────────┘              │
                         │                           │
                         ▼    S403B                  │
        ┌────────────────────────────┐              │
        │ Determine validity of each │              │
        │ reference sample location  │              │
        └────────────────────────────┘              │
                         │                           │
                         ▼    S403C                  │
        ┌────────────────────────────┐              │
        │ Calculate sample value at  │              │
        │ invalid location using sample│            │
        │ value at valid location    │              │
        └────────────────────────────┘              ▼         S405A
                         │               ┌────────────────────────┐
                         ▼    S403D       │ Obtain difference data and│
        ┌────────────────────────────┐   │ prediction information   │
        │ Calculate predicted sample value│ └────────────────────────┘
        └────────────────────────────┘              │
                         │                           ▼         S405B
                         ▼    S404        ┌────────────────────────┐
        ┌────────────────────────────┐   │ Calculate reconstructed │
        │ Calculate reconstructed    │   │ sample value           │
        │ sample value               │   └────────────────────────┘
        └────────────────────────────┘              │
                         │◄───────────────────────────┘
                         ▼
                    ┌──────────┐
                    │   End    │
                    └──────────┘
```

FIG. 10

Moving picture coding apparatus 100

Selecting unit 102

Dividing unit 101

Header coding unit 106

First coding unit 104

Second coding unit 105

Bitstream generating unit 108

103

107

D101, D102, D103, D104, D105, D106, D107, D108, D109, D110

FIG. 11

First coding unit 104

201 First selecting unit

202

D201

D202

D203

203 Validity determining unit

204 Reference sample calculating unit

205 Second selecting unit

206 Predicted sample calculating unit

D204

D205

D206

220 Intra predicting unit

D207

207 Difference data calculating unit

D208

208

209 Coding unit

D209

D210

210 Reconstructing unit

D211

211 Memory unit

212 Non-intra predicting unit

D212

D213

D214

D215

D216

D217

FIG. 12

Moving picture decoding apparatus    300

301
Analyzing unit

D302

D303    303    D305

First decoding unit

305    306

D301    302    Image generating unit    D308

304

D304    Second decoding unit    D306    D307

FIG. 13

303

First decoding unit

401

First analyzing unit

D402

D403

403

Second analyzing unit

420

Intra predicting unit

405   D406   406

D404   404   D405

Validity determining unit

Reference sample calculating unit

Predicted sample calculating unit

D401

402

D411

D407   D408   408   D409

407   Reconstructed sample calculating unit

411

Non-intra reconstructing unit

D412

D413   409

D417   D416   D415   D410

Memory unit

410   D414

EP 2 661 086 A1

41

## FIG. 14

Start

Select one of selective intra DC prediction scheme and non-selective intra DC prediction scheme — S501

Divide picture into blocks — S502

Code blocks into bitstream using selected intra DC prediction scheme — S503

Code result of selection of intra DC prediction scheme into header of bitstream — S504

End

## FIG. 15A

901 — Sequence header
902 — Pictures
900

960

## FIG. 15B

901 — Sequence header
902 — Pictures
900

911 — Picture header  Picture data — 912

960   Slices — 913

## FIG. 15C

901 — Sequence header
902 — Pictures
900

911 — Picture header    Picture data — 912

Slices
913    921

Slice header    Slice data — 922

960

## FIG. 15D

901 — Sequence header
902 — Pictures
900

Level
Profile

Profile

Table → 960

Level

Profile
961    962
961

Level
962

## FIG. 16

Start

Select prediction method for block — S601

Intra DC prediction? — S602    No

Yes — S603

Select valid (intra-predicted) sample location

Calculate predicted sample value — S604

Calculate difference data — S605

Calculate difference data and prediction information by performing non-intra DC prediction processing — S607

Coding — S606

End

## FIG. 17

Start

Obtain result of selection between selective intra DC prediction scheme and non-selective intra DC prediction scheme by analyzing header — S701

Decode using intra DC prediction scheme shown by selection result — S702

End

## FIG. 18

Start

Obtain prediction method for block — S801

Intra DC prediction? — S802
— No → Obtain difference data and prediction information — S807
Calculate reconstructed sample value — S808

Yes
Obtain difference data — S803

Select valid (intra-predicted) sample location — S804

Calculate predicted sample value — S805

Calculate reconstructed sample value — S806

End

FIG. 19

Moving picture coding apparatus 500

Selecting unit 502

D502

Header coding unit 506

D509

Bitstream generating unit 508

D510

Dividing unit 501

D503

503

D504

D505

First coding unit 504

D506

Second coding unit 505

D507

507

D508

## FIG. 20

FIG. 21

FIG. 22

EP 2 661 086 A1

FIG. 23

Streaming server ex103

Camera ex116

LSI ex500

Computer ex111

ex106

Game machine ex115

ex107

Internet ex101

Telephone
network
ex104

ex108

PDA ex112

ex109

Camera ex113

Internet service provider ex102

ex110

ex100

Cellular phone ex114

## FIG. 24

Broadcast satellite ex202

ex214

Monitor ex213

Reproduction apparatus ex212

Cellular phone ex114

Antenna ex204

Antenna ex205

Car ex210

Car navigation system ex211

Broadcast station ex201

Cable ex203

Monitor ex219

STB ex217

Television ex300

Reader/recorder ex218

ex215

ex216

SD

ex200

## FIG. 25

FIG. 26

FIG. 27

Optical disk
ex215

Recording blocks
ex231

Information track
ex230

| ex232 |
|-------|
| Inner circumference area |
| Data recording area    ex233 |
| Outer circumference area    ex234 |

## FIG. 28A

Antenna ex350

Audio output unit ex357

Display unit ex358

Camera unit ex365

Slot unit ex364

Operation key unit ex366

ex216

Audio input unit ex356
ex114

## FIG. 28B

ex370

ex358 Display unit

ex359 LCD control unit

ex361 Power supply circuit unit → To each unit

ex350

ex351 Transmitting and receiving unit

ex352 Modulation/demodulation unit

ex360 Main control unit

ex367 Memory unit

ex364 Slot unit

ex216 Recording medium

ex353 Multiplexing/demultiplexing unit

ex355 Video signal processing unit

ex363 Camera interface unit

ex365 Camera unit

ex356 Audio input unit

ex354 Audio signal processing unit

ex362 Operation input control unit

ex366 Operation key unit

ex357 Audio output unit

FIG. 29

| |
|---|
| Video stream (PID=0x1011 Primary video) |
| Audio stream (PID=0x1100) |
| Audio stream (PID=0x1101) |
| Presentation graphics stream (PID=0x1200) |
| Presentation graphics stream (PID=0x1201) |
| Interactive graphics stream (PID=0x1400) |
| Video stream (PID=0x1B00 Secondary video) |
| Video stream (PID=0x1B01 Secondary video) |

# FIG. 30

Video frame stream          Audio frame stream

ex235          ex238
ex236          ex239
ex237          ex240

Multiplexed data
ex247

ex243          ex246
ex242          ex245
ex241          ex244

Presentation graphics stream          Interactive graphics stream

EP 2 661 086 A1

FIG. 31

Video frame stream

| I-picture | P-picture | B-picture | B-picture | P-picture | B-picture | · · · |

yy1　　　yy2　　　yy3　　　yy4

Stream of
PES packets

| | I-picture | | P-picture | | B-picture | | B-picture | · · · |

PES　　PES
header　payload

# FIG. 32

Stream of TS packets

TS header (4 Byte)  TS payload (184 Byte)

Stream of source packets

TP_extra_header (4 Byte)  TS packet (188 Byte)

Multiplexed data

SPN 0 1 2 3 4 5 6 7 ...

Source packet

# FIG. 33

Data structure of PMT

| PMT header |
| --- |
| Descriptor#1 |
| ... |
| Descriptor#N |
| Stream information#1 |
| ... |
| Stream information#N |

| Stream type |
| --- |
| PID |
| Stream descriptor#1 |
| ... |
| Stream descriptor#N |

FIG. 34

Clip information file

XXX. CLPI

| Clip information |
| Stream attribute information |
| Entry map |

| System rate |
| Reproduction start time |
| Reproduction end time |

Multiplexed data (XXX. M2TS)

## FIG. 35

EP 2 661 086 A1

## FIG. 36

```
┌─────────────────────────────────┐
│ Obtain identification information│ ⟋ exS100
│ (stream type, video stream       │
│ attribute information) from      │
│ multiplexed data                 │
└─────────────────────────────────┘
                │
                ▼
           ◇ exS101
         Video data
      generated by video
   coding method or video
   coding apparatus in
      present invention?

    YES                    NO
exS102                          exS103
    │                       │
    ▼                       ▼
┌──────────────────┐   ┌──────────────────┐
│ Decode video data│   │ Decode video data│
│ using video      │   │ using decoding   │
│ decoding         │   │ method in        │
│ method in present│   │ conformity with  │
│ invention        │   │ corresponding    │
│                  │   │ conventional     │
│                  │   │ standard         │
└──────────────────┘   └──────────────────┘
```

EP 2 661 086 A1

# FIG. 37

FIG. 38

FIG. 39

exS200 — Obtain identification information from coded stream

exS201 — Coded stream generated by video coding method or video coding apparatus in present invention?

YES → exS202 — Set driving frequency higher

NO → exS203 — Set driving frequency lower

## FIG. 40

| Corresponding standard | Driving frequency |
|---|---|
| MPEG4. AVC | 500MHz |
| MPEG2 | 350MHz |
| ⋮ | ⋮ |

## FIG. 41A

ex901

ex902

Decoding processing unit dedicated to present invention

Decoding processing unit shared between present invention and conventional standard

ex900

## FIG. 41B

Decoding processing unit shared between present invention and conventional standard
ex1003

ex1001

ex1002

Decoding processing unit dedicated to present invention

Decoding processing unit dedicated to conventional standard

ex1000

## INTERNATIONAL SEARCH REPORT

| | International application No. |
| --- | --- |
| | PCT/JP2011/007341 |

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2010-166133 A (Hitachi Kokusai Electric Inc.), 29 July 2010 (29.07.2010), abstract; paragraphs [0010] to [0023], [0027] to [0057]; fig. 1 to 23 & US 2010/0177821 A1 | 1-5,9-19 |
| X | WO 2006/106935 A1 (Panasonic Corp.), 12 October 2006 (12.10.2006), paragraphs [0002] to [0016]; fig. 1 to 3 & EP 1871117 A1        & KR 10-2008-0000562 A & CN 101133650 A        & US 2009/0141798 A1 & AT 501596 T        & DE 602006020556 D | 1,6-8,10-19 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 March, 2012 (26.03.12) | 03 April, 2012 (03.04.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2011/007341 |

C (Continuation).   DOCUMENTS CONSIDERED TO BE RELEVANT

| Category* | Citation of document, with indication, where appropriate, of the relevant passages | Relevant to claim No. |
|---|---|---|
| P,X | Viktor Wahadaniah et al., Constrained Intra Prediction Scheme for Flexible-Sized Prediction Units in HEVC, Joint Collaborative Team on Video Coding (JCT-VC) of ITU-T SG16 WP3 and ISO/IEC JTC1/SC29/WG11, JCTVC-D094_r1, 4th Meeting: Daegu, KR, 2011.01, pp.1-8 | 1-19 |
| P,X | Rickard Sjoberg and Jonatan Samuelsson, Constrained Intra source code implementation, Joint Collaborative Team on Video Coding (JCT-VC) of ITU-T SG16 WP3 and ISO/IEC JTC1/ SC29/WG11, JCTVC-D386_r1, 4th Meeting: Daegu, KR, 2011.01, pp.1-4 | 1-19 |
| A | JP 2009-272727 A  (Toshiba Corp.), 19 November 2009 (19.11.2009), paragraphs [0010] to [0014]; fig. 1 to 4 (Family: none) | 1-19 |
| P,A | Keiichi Chono et al., Constrained intra prediction for reducing visual artifacts caused by lossy decoder-side memory compression, Joint Collaborative Team on Video Coding (JCT-VC) of ITU-T SG16 WP3 and ISO/IEC JTC1/SC29/WG11, JCTVC-D086, 4th Meeting: Daegu, KR, 2011.01, pp.1-8 | 1-19 |

Form PCT/ISA/210 (continuation of second sheet) (July 2009)